(19) **Europäisches Patentamt**
**European Patent Office**
**Office européen des brevets**

(11) **EP 4 601 373 A1**

(12) **EUROPEAN PATENT APPLICATION**
published in accordance with Art. 153(4) EPC

(43) Date of publication:
**13.08.2025 Bulletin 2025/33**

(51) International Patent Classification (IPC):
*H04W 72/04* (2023.01)    *H04L 5/00* (2006.01)

(21) Application number: **23867535.9**

(52) Cooperative Patent Classification (CPC):
**H04L 5/00; H04W 72/04; H04W 72/0453;**
**H04W 72/0457**

(22) Date of filing: **20.09.2023**

(86) International application number:
**PCT/CN2023/119884**

(87) International publication number:
**WO 2024/061248 (28.03.2024 Gazette 2024/13)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **23.09.2022 CN 202211162180**

(71) Applicant: **Apogee Networks, LLC**
**Dallas, TX 75201 (US)**

(72) Inventors:
• **WU, Keying**
**Shanghai 201206 (CN)**
• **WANG, Ping**
**Shanghai 201206 (CN)**
• **ZHANG, Xiaobo**
**Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS USED IN NODE FOR WIRELESS COMMUNICATION**

(57)    Disclosed in the present application are a method and apparatus used in a node for wireless communication. The method comprises: a first node receiving first signaling, which comprises scheduling information of a first signal; and receiving or sending the first signal in a first symbol set, wherein a first BWP is an active BWP, the first signaling indicates a second BWP, the first signaling comprises a first domain and a second domain, the first domain is used for determining the first symbol set, the second domain is used for determining frequency domain resource allocation of the first signal, the bit width of the second domain is a first bit width, which depends on the size of the first BWP, and an indication of the second domain depends on a second bit width, which depends on the size of the second BWP and the first symbol set. The method improves transmission and scheduling flexibility, optimizes signaling designs, ensures good compatibility, and increases a resource utilization rate.

Figure 1

## Description

### Technical Field

The present application relates to a transmission method and apparatus in a wireless communication system, in particular to a transmission method and apparatus for wireless signals in a wireless communication system supporting a cellular network.

### Background Art

In an existing new radio (NR) system, spectrum resources are statically divided into frequency division duplexing (FDD) spectra and time division duplexing (TDD) spectra. For the TDD spectra, both a base station and user equipment (UE) operate in a half-duplex mode. Such a half-duplex mode avoids self-interference and can alleviate the impact of cross link interference, but it also brings about a decrease in resource utilization rate and an increase in latency. In response to these problems, supporting a flexible duplex mode or a variable link direction (uplink or downlink or flexible) on the TDD spectra or the FDD spectra becomes a possible solution. In the 3rd Generation Partner Project (3GPP) radio access network (RAN) #88e-th meeting and the 3GPP R-18 workshop, supporting the more flexible duplex mode or a full-duplex mode in NR R-18 has received extensive attention and discussion, especially a subband non-overlapping full duplex (SBFD) mode at a gNB (NR node B) side. Communications in this mode will be subject to severe interference, comprising self-interference and cross link interference (CLI). To solve the interference problem, advanced interference cancellation techniques are required, comprising antenna isolation, beamforming, radio frequency (RF) level interference cancellation and digital interference cancellation.

### Summary of the Invention

The applicant found through research that in an SBFD scenario, spectrum allocation for uplink and downlink transmission will become more flexible and the interference situation will become more complicated. In this scenario, an existing transmission scheme needs to be reconsidered.

In response to the above problems, the present application discloses a solution. It should be noted that although the original intention of the present application is for the SBFD scenario, the present application can also be applied to other non-SBFD scenarios. Furthermore, adopting a unified design scheme for different scenarios (including but not limited to SBFD and other non-SBFD scenarios) can also help reduce hardware complexity and costs. In the absence of conflict, the embodiments and features in the embodiments in any node of the present application can be applied to any other node. In the absence of conflict, the embodiments and features in the embodiments of the present application can be arbitrarily combined with each other.

As one embodiment, the interpretation of the terminology in the present application is based on the definition of the 3GPP specification protocol TS36 series.

As one embodiment, the interpretation of the terminology in the present application is based on the definition of the 3GPP specification protocol TS38 series.

As one embodiment, the interpretation of the terminology in the present application is based on the definition of the 3GPP specification protocol TS37 series.

As one embodiment, the interpretation of the terminology in the present application is based on the definition of the specification protocol of the Institute of Electrical and Electronics Engineers (IEEE).

The present application discloses a method used in a first node for wireless communication, comprising:

receiving a first signaling, wherein the first signaling comprises scheduling information of a first signal; and
receiving the first signal in a first symbol set, or sending the first signal in the first symbol set,
wherein the first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

As one embodiment, benefits of the above method comprise: improved transmission flexibility.

As one embodiment, benefits of the above method comprise: optimized signaling design.

As one embodiment, benefits of the above method comprise: improved scheduling flexibility.

As one embodiment, benefits of the above method comprise: optimized determination of the second bit width.

As one embodiment, benefits of the above method comprise: improved system performance with little change to a current system.

Specifically, according to one aspect of the present application, the above method comprises: an indication of the second field of the first signaling depends on a target resource allocation type, and the target resource allocation type is a first resource allocation type or a second resource allocation type; and the target resource allocation type depends on a size relationship between the first bit width and the second bit width.

Specifically, according to one aspect of the present application, the above method comprises: the second field of the first signaling comprises a first subfield and a second subfield; the first subfield of the first signaling is used to determine X1 bits, and the second subfield of the first signaling is used to determine Y1 bits; X1 and Y1 are positive integers respectively; the X1 bits and the Y1 bits are used together to determine frequency domain resource allocation of the first signal; and the Y1 depends on the first symbol set.

Specifically, according to one aspect of the present application, the above method comprises:

receiving a first information block,
wherein the first information block is used to determine a first time domain resource, or the first information block is used to determine a first time domain resource and a first frequency domain resource.

Specifically, according to one aspect of the present application, the above method comprises: the second bit width depends on whether the first symbol set overlaps with the first time domain resource; and when the first symbol set overlaps with the first time domain resource, a size of frequency domain resources in the second BWP excluding the first frequency domain resource is used to determine the second bit width.

As one embodiment, benefits of the above method comprise: ensured good compatibility and improved resource utilization rate by determining a second bit width according to actual needs.

Specifically, according to one aspect of the present application, the above method comprises:

receiving a first information block, wherein the first information block is used to determine a first time domain resource, or the first information block is used to determine a first time domain resource and a first frequency domain resource, wherein the Y1 depends on whether the first symbol set overlaps with the first time domain resource; and when the first symbol set overlaps with the first time domain resource, a size of frequency domain resources in the second BWP excluding the first frequency domain resource is used to determine the Y1.

Specifically, according to one aspect of the present application, the above method comprises: the first information block configures symbols in the first time domain resource as a first type in a first frequency domain sub-resource, and configures symbols in the first time domain resource as a second type in a second frequency domain sub-resource; the first type and the second type correspond to opposite link directions; and the first frequency domain resource comprises the first frequency domain sub-resource.

According to one aspect of the present application, the first node comprises a piece of user equipment.

According to one aspect of the present application, the first node comprises one relay node.

The present application discloses a method used in a second node for wireless communication, comprising:

sending a first signaling, wherein the first signaling comprises scheduling information of a first signal; and
sending the first signal in a first symbol set, or receiving the first signal in a first symbol set,
wherein the first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

Specifically, according to one aspect of the present application, the above method comprises: an indication of the second field of the first signaling depends on a target resource allocation type, and the target resource allocation type is a first resource allocation type or a second resource allocation type; and the target resource allocation type depends on a size relationship between the first bit width and the second bit width.

Specifically, according to one aspect of the present application, the above method comprises: the second field of the first signaling comprises a first subfield and a second subfield; the first subfield of the first signaling is used to determine X1 bits, and the second subfield of the first signaling is used to determine Y1 bits; X1 and Y1 are positive integers respectively; the X1 bits and the Y1 bits are used together to determine frequency domain resource allocation of the first signal; and the Y1 depends on the first symbol set.

Specifically, according to one aspect of the present application, the above method comprises:

sending a first information block,
wherein the first information block is used to determine a first time domain resource, or the first information block is used to determine a first time domain resource and a first frequency domain resource.

Specifically, according to one aspect of the present application, the above method comprises: the second bit width depends on whether the first symbol set overlaps with the first time domain resource; and when the first symbol set overlaps with the first time domain resource, a size of frequency domain resources in the second BWP excluding the first frequency domain resource is used to determine the second bit width.

Specifically, according to one aspect of the present application, the above method comprises:

sending a first information block, wherein the first information block is used to determine a first time domain resource, or the first information block is used to determine a first time domain resource and a first frequency domain resource, wherein the Y1 depends on whether the first symbol set overlaps with the first time domain resource; and when the first symbol set overlaps with the first time domain resource, a size of frequency domain resources in the second BWP excluding the first frequency domain resource is used to determine the Y1.

Specifically, according to one aspect of the present application, the above method comprises: the first information block configures symbols in the first time domain resource as a first type in a first frequency domain sub-resource, and configures symbols in the first time domain resource as a second type in a second frequency domain sub-resource; the first type and the second type correspond to opposite link directions; and the first frequency domain resource comprises the first frequency domain sub-resource.

According to one aspect of the present application, the second node is a base station.

According to one aspect of the present application, the second node is user equipment.

According to one aspect of the present application, the second node is a relay node.

The present application discloses a first node used for wireless communication, comprising:

a first receiver, receiving a first signaling, wherein the first signaling comprises scheduling information of a first signal; and
a first processor, receiving the first signal in a first symbol set, or sending the first signal in a first symbol set, wherein the first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

The present application discloses a second node used for wireless communication, comprising:

a first transmitter, sending a first signaling, wherein the first signaling comprises scheduling information of a first signal; and
a second processor, sending the first signal in a first symbol set, or receiving the first signal in the first symbol set, wherein the first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

As one embodiment, compared with the traditional solution, the present application has the following advantages:

improved transmission flexibility;
improved scheduling flexibility;
optimized signaling design; and
improved resource utilization rate while ensuring good compatibility.

## Brief Description of the Drawings

By reading the detailed description of the non-limiting embodiments in the following drawings, other features, purposes and advantages of the present application will become more obvious:

Figure 1 shows a flow chart of a first signaling and a first signal according to one embodiment of the present application;

Figure 2 shows a schematic diagram of a network architecture according to one embodiment of the present application;

Figure 3 shows a schematic diagram of an embodiment of a wireless protocol architecture of a user plane and a control plane according to one embodiment of the present application;

Figure 4 shows a schematic diagram of a first communication device and a second communication device according to one embodiment of the present application;

Figure 5 shows a flow chart of transmission between a first node and a second node according to one embodiment of the present application;

Figure 6 shows another flow chart of transmission between a first node and a second node according to one embodiment of the present application;

Figure 7 shows a schematic diagram of an indication of a second field of first signaling depending on a target allocation type according to one embodiment of the present application;

Figure 8 shows a schematic diagram of a relationship between a second field of a first signaling and frequency domain resource allocation of a first signal according to one embodiment of the present application;

Figure 9 shows a schematic diagram of Y1 depending on a first symbol set according to one embodiment of the present application;

Figure 10 shows a schematic diagram of a first information block being used to determine a first time domain resource according to one embodiment of the present application;

Figure 11 shows a schematic diagram of a first information block being used to determine a first time domain resource and a first frequency domain resource according to one embodiment of the present application;

Figure 12 shows a schematic diagram of a second bit width depending on whether a first symbol set overlaps with a first time domain resource according to one embodiment of the present application;

Figure 13 shows a schematic diagram of Y1 depending on whether a first symbol set overlaps with a first time domain resource according to one embodiment of the present application;

Figure 14 shows a schematic diagram of a first information block configuring a type of symbols in a first symbol set according to one embodiment of the present application;

Figure 15 shows a structural block diagram of a processing apparatus used in a first node according to one embodiment of the present application; and

Figure 16 shows a structural block diagram of a processing apparatus used in a second node according to one embodiment of the present application.

## Detailed Description of Embodiments

The technical solution of the present application will be further described in detail below in conjunction with the drawings. It should be noted that, in the absence of conflict, the embodiments and features in the embodiments of the present application can be arbitrarily combined with each other.

## Embodiment 1

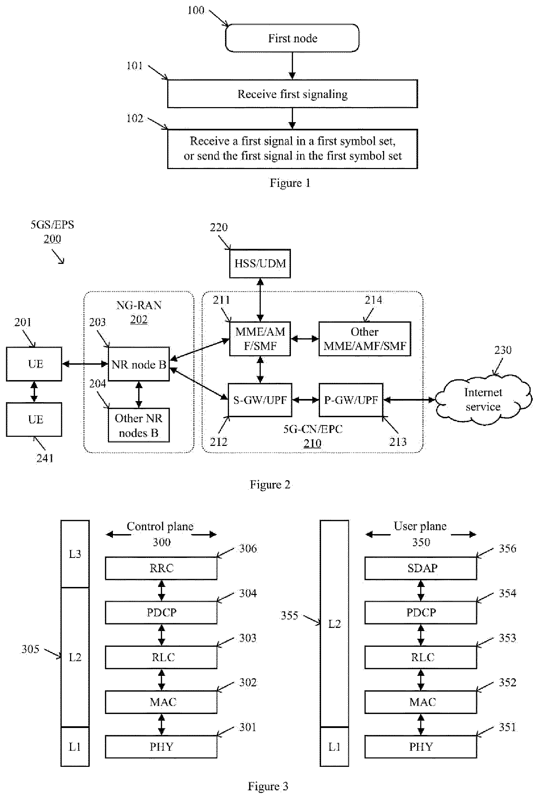

Embodiment 1 illustrates a flow chart of a first signaling and a first signal according to one embodiment of the present application, as shown in Figure 1. In Figure 1, each box represents one step. In particular, the order of steps in boxes does not represent a specific time sequence between steps.

A first node 100 receives a first signaling in step 101, wherein the first signaling comprises scheduling information of a first signal; and receives the first signal in a first symbol set, or sends the first signal in the first symbol set in step 102.

In Embodiment 1, the first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

As one embodiment, the BWP refers to: a bandwidth part.

As one embodiment, the first signaling comprises signalings of Layer 1 (L1).

As one embodiment, the first signaling comprises physical layer signalings.

As one embodiment, the first signaling is a physical layer signaling.

As one embodiment, the first signaling comprises dynamic signalings.

As one embodiment, the first signaling comprises downlink control information (DCI).

As one embodiment, the first signaling comprises information in one or more fields in a piece of DCI.

As one embodiment, a cyclic redundancy check (CRC) of the first signaling is scrambled by a cell (C)-radio network temporary identifier (RNTI).

As one embodiment, a CRC of the first signaling is scrambled by a modulation and coding scheme (MCS)-C-RNTI.

As one embodiment, the first signaling is a piece of DCI.

As one embodiment, a format of the first signaling is one of format 0_1, format 0_2, format 1_1 or format 1_2.

As one embodiment, a format of the first signaling is a format other than format 0_1, format 0_2, format 1_1 and format 1_2.

As one embodiment, the first signaling is one uplink grant signaling.

As one embodiment, the first signaling is one downlink grant signaling.

As one embodiment, the first signaling is used to schedule at least one physical downlink shared channel (PDSCH), and the first node 100 receives the first signal in the first symbol set.

As one embodiment, the first signaling is used to schedule at least one physical uplink shared channel (PUSCH), and the first node 100 sends the first signal in the first symbol set.

As one embodiment, the first signal comprises a baseband signal.

As one embodiment, the first signal comprises a wireless signal.

As one embodiment, the first signal comprises a radio frequency signal.

As one embodiment, the first signal carries one transport block (TB).

As one embodiment, the first signal comprises a signal transmitted on a physical channel.

As one embodiment, the first signal comprises a signal transmitted on a physical layer shared channel.

As one embodiment, the first signal is transmitted on a PDSCH.

As one embodiment, the first signal is transmitted on a PUSCH.

As one embodiment, the meaning of the expression "receiving the first signal" comprises: receiving a PDSCH.

As one embodiment, the meaning of the expression "receiving the first signal" comprises: the first signal comprises a PDSCH, and at least one bit block is received in this PDSCH.

As one embodiment, the meaning of the expression "receiving the first signal" comprises: the first signal is a PDSCH, and at least one bit block is received in this PDSCH.

As one embodiment, the meaning of the expression "receiving the first signal" comprises: the first signal belongs to a PDSCH, and at least one bit block is received in this PDSCH.

As one embodiment, the meaning of the expression "sending the first signal" comprises: sending a PUSCH.

As one embodiment, the meaning of the expression "sending the first signal" comprises: the first signal is a PUSCH, and at least one bit block is sent in this PUSCH.

As one embodiment, the meaning of the expression "sending the first signal" comprises: the first signal comprises a PUSCH, and at least one bit block is sent in this PUSCH.

As one embodiment, the meaning of the expression "sending the first signal" comprises: the first signal belongs to a PUSCH, and at least one bit block is sent in this PUSCH.

As one embodiment, in the present application, one bit block comprises one TB.

As one embodiment, in the present application, one bit block comprises at least one of a TB or a channel state information (CSI) report.

As one embodiment, in the present application, one bit block is sent on one PUSCH or one PDSCH after being subjected to at least channel coding.

As one embodiment, the scheduling information comprises one or more of a time domain resource, a frequency domain resource, a bandwidth part indicator (BWP indicator), an MCS, a hybrid automatic repeat request process number (HARQ process number), a redundancy version (RV), a new data indicator (NDI), an antenna port, and a sounding reference signal request (SRS request).

As one embodiment, the first symbol set comprises one symbol or a plurality of continuous symbols.

As one embodiment, the first symbol set comprises a plurality of discontinuous symbols.

As one embodiment, the first symbol set is located within one slot.

As one embodiment, the time domain resource allocated to the first signal is the first symbol set.

As one embodiment, the symbol comprises an orthogonal frequency division multiplexing (OFDM) symbol.

As one embodiment, the symbol comprises a discrete Fourier transform spread OFDM (DFT-S-OFDM) symbol.

As one embodiment, the symbol is obtained after an output of transform precoding is subjected to OFDM symbol generation.

As one embodiment, when the first node 100 receives the first signal in the first symbol set, the first BWP is a BWP where the first signaling is located.

As one embodiment, when the first node 100 sends the first signal in the first symbol set, the first BWP is an active uplink BWP (UL BWP).

As one embodiment, when the first node 100 receives the first signal in the first symbol set, the second BWP is one downlink BWP (DL BWP).

As one embodiment, when the first node 100 sends the first signal in the first symbol set, the second BWP is one UL BWP.

As one embodiment, the first node 100 is configured with a plurality of BWPs.

As one embodiment, the first BWP and the second BWP have different "BWP-Ids".

As one embodiment, the first BWP and the second BWP have the same "BWP-Id".

As one embodiment, the first signaling is used to determine a "BWP-Id" of the second BWP.

As one embodiment, the first signaling indicates a "BWP-Id" of the second BWP.

As one embodiment, the first signaling comprises a piece of DCI, and a DCI field bandwidth part indicator in the first signaling is used to determine the second BWP.

As one embodiment, the first signaling comprises a piece of DCI, and a DCI field bandwidth part indicator in the first signaling is used to indicate the second BWP.

As one embodiment, the first signaling comprises a piece of DCI, a DCI field bandwidth part indicator in the first signaling comprises one bit, and the one bit indicates a "BWP-Id" of the second BWP.

As one sub-embodiment of the above embodiment, a "BWP-Id" of the second BWP comprises the "BWP-Id" being equal to 0;

as one embodiment, the first signaling comprises a piece of DCI, a DCI field bandwidth part indicator in the first signaling comprises two bits, and the two bits indicate a "BWP-Id" of the second BWP.

As one sub-embodiment of the above embodiment, a "BWP-Id" of the second BWP comprises the "BWP-Id" being equal to 0;

as one sub-embodiment of the above embodiment, a "BWP-Id" of the second BWP does not comprise the "BWP-Id" being equal to 0.

As one embodiment, a "BWP-Id" of the second BWP is equal to a value of a DCI field bandwidth part indicator in the first signaling plus 1.

As one embodiment, a "BWP-Id" of the second BWP is equal to a value of a DCI field bandwidth part indicator in the first signaling.

As one embodiment, the first field comprises at least one DCI field.

As one embodiment, the first field comprises DCI field time domain resource assignment.

As one embodiment, the first field is one DCI field.

As one embodiment, the first field is DCI field time domain resource assignment.

As one embodiment, the second field comprises at least one DCI field.

As one embodiment, the second field comprises DCI field frequency domain resource assignment.

As one embodiment, the second field is one DCI field.

As one embodiment, the second field is DCI field frequency domain resource assignment.

As one embodiment, the first field and the second field each comprises at least one bit.

As one embodiment, the first field of the first signaling indicates the first symbol set.

As one embodiment, the first field of the first signaling comprises DCI field time domain resource assignment, and the DCI field time domain resource assignment in the first signaling is used to determine the first symbol set.

As one embodiment, the first field of the first signaling comprises DCI field time domain resource assignment, and the DCI field time domain resource assignment in the first signaling indicates the first symbol set.

As one embodiment, the first signaling indicates one row in a resource allocation table, and the one row is used to determine a first slot offset, a first starting symbol, and a first length; the first slot offset, the first starting symbol, and the first length are used together to determine the first symbol set; and the first slot offset and the first starting symbol are respectively non-negative integers, and the first length is a positive integer.

As one sub-embodiment of the above embodiment, the first signaling is a piece of DCI, and DCI field time domain resource assignment in the first signaling indicates the one row.

As one sub-embodiment of the above embodiment, the first slot offset and $n_1$ are used together to determine a slot $K_S$, and the first signaling is transmitted in the $n_1$.

As one reference embodiment of the above sub-embodiment, the slot $K_s$ is equal to the sum of the $n_1$ and the first slot offset.

As one reference embodiment of the above sub-embodiment, the $K_s$ is equal to

$$\lfloor n_1 \cdot 2^{\mu_1}/2^{\mu_2} \rfloor + \text{the first slot offset}$$ , wherein the $\mu_1$ and the $\mu_2$ are subcarrier spacing configuration of the first signal and subcarrier spacing configuration of the first signaling respectively.

As one sub-embodiment of the above embodiment, a first starting symbol in the first symbol set starts from the slot $K_S$.

As one sub-embodiment of the above embodiment, a starting symbol in the first symbol set is a symbol S relative to the starting of a slot, and the symbol S is a first starting symbol.

As one embodiment, the bit width of the second field of the first signaling refers to: the number of bits comprised in the second field of the first signaling.

As one embodiment, the first bit width is a positive integer.

As one embodiment, the size of the first BWP comprises: the number of physical resource blocks (PRBs) comprised in the first BWP.

As one embodiment, the size of the first BWP comprises: the number of RB sets comprised in the first BWP.

As one embodiment, the RB set is configured by a higher layer parameter "IntraCellGuardBandsPerSCS".

As one embodiment, the RB set is configured by a higher layer parameter "intraCellGuardBandsUL-List".

As one embodiment, the one RB set is a group of continuous RBs.

As one embodiment, there is a guard band between two adjacent RB sets.

As one embodiment, the different RB sets correspond to different channel access procedures.

As one embodiment, the first bit width varies with the size of the first BWP.

As one embodiment, the first bit width increases with the increase of the size of the first BWP.

As one embodiment, when the size of the first BWP is equal to A1, the first bit width is equal to B1; and when the size of the first BWP is equal to A2, the first bit width is equal to B2, wherein the A1 is greater than the B1, and the B1 is not less than the B2.

As one embodiment, the first bit width is equal to a first target RB group (RBG) number, and the first target RBG number depends on the size of the first BWP.

As one embodiment, one RBG is a group of continuous resource blocks (RBs).

As one embodiment, one RBG is a group of continuous virtual RBs (VRBs).

As one embodiment, the first target RBG number is equal to the sum of the size of the first BWP and a first parameter divided by a first nominal RBG size and rounded up, wherein the first parameter is related to an index of a starting RB of the first BWP and the first nominal size; and the first nominal RBG size depends on a higher layer parameter *"rgb-Size"* and the size of the first BWP.

As one sub-embodiment of the above embodiment, an index of the starting RB of the first BWP refers to: on Common RB grid, in relation to CRB #0.

As one sub-embodiment of the above embodiment, the first parameter is equal to an index of the starting RB of the first BWP modulo the first nominal RBG size.

As one embodiment, the first target RBG number is equal to ⌈(a size of a first BWP + (an index of a starting RB of a first BWP *mod* a first nominal RBG size))/ a first nominal RBG size⌉.

As one embodiment, the first bit width is equal to a base-2 logarithm of a second parameter and rounded up, and the second parameter depends on the size of the first BWP.

As one sub-embodiment of the above embodiment, the second parameter is equal to a size of a first BWP · (a size of a first BWP + 1)/2.

As one sub-embodiment of the above embodiment, the second parameter is equal to a first reference RBG number · (a first reference RBG number + 1)/2; the first reference RBG number is equal to ⌈(a size of a first BWP + (an index of a starting RB of a first BWP *mod K*1))/*K*1⌉; and the *K1* depends on one of higher layer parameters *"resourceAllocationType1GranularityDCI-0-2"* and *"resourceAllocationType1GranularityDCI-1-2"*.

As one embodiment, the first bit width is equal to ⌈$log_2$(a size of a first BWP · (a size of a first BWP + 1)/2)⌉.

As one embodiment, the first bit width is equal to ⌈$log_2$(a first reference RBG number · (a first reference RBG number + 1)/2)⌉.

As one embodiment, the first bit width is equal to the sum of the maximum value of the first target RBG number and a first integer plus 1, and the first integer depends on the size of the first BWP.

As one sub-embodiment of the above embodiment, the first integer is
$$\lceil log_2(\text{a size of a first BWP} \cdot (\text{a size of a first BWP} + 1)/2) \rceil.$$

As one sub-embodiment of the above embodiment, the first integer is
$$\lceil log_2(\text{a first reference RBG number} \cdot (\text{a first reference RBG number} + 1)/2) \rceil$$ ; the first reference RBG number is equal to ⌈(a size of a first BWP + (an index of a starting RB of a first BWP *mod K*))/*K*⌉; and the K depends on one of higher layer parameters *"resourceAllocationType1GranularityDCI-0-2"* and *"resourceAllocationTy-*

pe1GranularityDCI-1-2".

As one embodiment, the first bit width is equal to max($\lceil log_2$ (a size of a first BWP · (a size of a first BWP + 1)/2)$\rceil$, a first target RBG number) + 1.

As one embodiment, the first bit width is equal to $max(\lceil log_2$(a first reference RBG number · (a first reference RBG number + 1)/ 2)$\rceil$, a first target RBG number) + 1.

As one embodiment, the second bit width is a positive integer.

As one embodiment, the size of the second BWP comprises: the number of PRBs comprised in the second BWP.

As one embodiment, the size of the second BWP comprises: the number of RB sets comprised in the second BWP.

As one embodiment, the RB set is configured by a higher layer parameter *IntraCellGuardBandsPerSCS.*

As one embodiment, the second bit width varies with the size of the second BWP.

As one embodiment, the second bit width increases with the increase of the size of the second BWP.

As one embodiment, when the size of the second BWP is equal to A3, the second bit width is equal to B3; when the size of the second BWP is equal to A4, the second bit width is equal to B4, wherein the A3 is greater than the B3, and the B4 is not less than the B4.

As one embodiment, the second bit width varies with the first symbol set.

As one embodiment, the second bit width is equal to a second target RBG number, and the second target RBG number depends on the size of the second BWP and the first symbol set.

As one embodiment, the meaning of the sentence "an indication of the second field of the first signaling depends on a second bit width" comprises: interpretation of the second field of the first signaling depends on the second bit width.

As one embodiment, an indication of the second field of the first signaling depends on a size of the second bit width.

As one embodiment, an indication of the second field of the first signaling depends on a size relationship between the second bit width and the first bit width.

As one embodiment, a second field of the first signaling comprises a first bitmap, and the first bitmap indicates RBGs allocated to the first signal.

As one embodiment, a size of any the RBG allocated to the first signal depends on the size of the second BWP.

As one embodiment, a size of any the RBG allocated to the first signal depends on a higher layer parameter *"rbg-size"* and the size of the second BWP.

As one embodiment, the number of bits comprised in the first bitmap depends on the size of the first BWP.

As one embodiment, the number of the bits comprised in the first bitmap depends on a higher layer parameter *"resourceAllocation"* and the size of the first BWP.

As one embodiment, the second BWP comprises N2 RBGs, the first BWP comprises N1 RBGs, and the N2 is greater than the N1; the number of the bits comprised in the first bitmap is equal to N1; the first bitmap indicates whether each RBG in a first RBG subset of the N2 RBGs is allocated to the first signal; and the number of RBGs comprised in the first RBG subset is equal to N1.

As one sub-embodiment of the above embodiment, the N2 RBGs are arranged in order from low to high frequency, and the first RBG subset comprises top N1 RBGs in the N2 RBGs.

As one sub-embodiment of the above embodiment, a size of each RBG in the N2 RBGs depends on the size of the second BWP; and a size of each RBG in the N1 RBGs depends on the size of the first BWP.

As one sub-embodiment of the above embodiment, N1 bits of the first bitmap correspond one-to-one to each RBG in the first RBG subset, and a bit equal to 1 in the N1 bits indicates that the corresponding RBG is an RBG allocated to the first signal.

As one embodiment, the second field of the first signaling indicates a first resource indication value (RIV), and the first RIV is used to determine a first starting RB and a first RB length; and the first starting RB and the first RB length are used to determine frequency domain resource allocation of the first signal.

As one embodiment, a starting RB allocated to the first signal is the first starting RB, and the number of RBs allocated to the first signal is equal to the first RB length.

As one embodiment, the first RIV is used to determine a first reference starting RB and a first reference RB length, the first starting RB is equal to the first reference starting RB multiplied by a second integer, and the first RB length is equal to the first reference RB length multiplied by the second integer; and the second integer is related to the size of the second BWP.

As one reference embodiment of the above embodiment, the first RIV is equal to *N3(a* first reference RB length - 1) + a first reference starting RB, or, the first RIV is equal to *N3*(*N3* - a first reference RB length + 1) + *(N3* - 1 - a first reference starting RB), and the *N3* is equal to a size of a first initial BWP.

As one reference embodiment of the above embodiment, the second integer is equal to the largest positive integer in {1, 2, 4, 8} that is not greater than a rounded value obtained by dividing the size of the second BWP by the size of the first BWP.

As one embodiment, the second field of the first signaling indicates a first RIV, the first RIV is used to determine a first starting RBG and a first RBG length; and the first starting RBG and the first RBG length are used to determine frequency domain resource allocation of the first signal.

As one embodiment, a starting RBG allocated to the first signal is the first starting RBG, and the number of RBs allocated to the first signal is equal to the first RBG length.

As one reference embodiment of the above embodiment, the first RIV is equal to $N2(a$ first RBG length - 1) + a first starting RBG, or, the first RIV is equal to $N2(N2$-a first RBG length + 1) + (N2 - 1 - a first starting RBG), and the $N2$ is equal to the number of RBGs comprised in the second BWP.

As one reference embodiment of the above embodiment, a size of any RBG allocated to the first signal depends on one of higher layer parameters *"resourceAllocationType1GranularityDCI-0-2"* or *"resourceAllocationType1GranularityDCI-1-2"*.

As one reference embodiment of the above embodiment, a size of any RBG allocated to the first signal is 1.

As one reference embodiment of the above embodiment, a size of any RBG allocated to the first signal is not less than 2.

As one embodiment, the RB comprises a PRB.

As one embodiment, the RB comprises a VRB.

As one embodiment, the second field of the first signaling comprises a first subfield and a second subfield; and the first subfield of the first signaling indicates a first interlace set, the first signaling schedules the second subfield to indicate a first set of RB sets, and the first interlace set and the first set of RB sets are used together to determine frequency domain resource allocation of the first signal.

As one sub-embodiment of the above embodiment, an intersection of the first interlace set and the first set of RB sets is a frequency domain resource allocated to the first signal.

As one embodiment, the interlace refers to an interlaced resource block (IRB), and the definition of the IRB refers to 3GPP TS38.211 4.4.4.6 (V17.2.0).

As one embodiment, an indication of the first subfield of the first signaling depends on subcarrier spacing configuration of the first BWP and subcarrier spacing configuration of the second BWP.

As one embodiment, the first subfield of the first signaling indicates a first RIV, the first RIV is used to determine a first starting interlace and a first interlace length of the first interlace set, and the first starting interlace and the first interlace length are used together to determine the first interlace set; and the first starting interlace is one non-negative integer, and the first interlace length is one positive integer.

As one embodiment, the first interlace set comprises an interlace with an index equal to the first starting interlace + $l$; when the first RIV is less than $M(M+1)/2$, the $l$=0, ... the first interlace length-1; when the first RIV is greater than or equal to $M(M+1)/2$, the $l$ depends on the first starting interlace; and the M is equal to the maximum number of interlaces that the first interlace set may contain.

As one reference embodiment of the above embodiment, the first RIV is equal to M(the first interlace set length - 1) + the first starting interlace, or, the first RIV is equal to $M$(M - the first interlace set length + 1) + (M - 1 - the first starting interlace).

As one reference embodiment of the above embodiment, when the first RIV is greater than or equal to $M(M+1)/2$, the $l$ is determined according to the first starting interlace, a difference between the first RIV and $M(M+1)/2$ and Table 6.1.2.2.3-1 in 3GPP TS38.214.

As one reference embodiment of the above embodiment, the M is equal to 5.

As one reference embodiment of the above embodiment, the M refers to Table 4.4.4.6-1 in 3GPP TS38.211 4.4.4.6 (V17.2.0).

As one embodiment, the first subfield of the first signaling comprises a first bitmap, and the first bitmap indicates an interlace allocated to the first signal.

As one sub-embodiment of the above embodiment, the first bitmap corresponds one-to-one to each interlace in the first interlace set, and a bit equal to 1 in the first bitmap represents that the corresponding interlace is an interlace allocated to the first signal.

As one embodiment, an indication of the second subfield of the first signaling depends on subcarrier spacing configuration of the second BWP.

As one embodiment, the second subfield of the first signaling indicates a first set of RB sets.

As one embodiment, the second subfield of the first signaling indicates a second RIV, and the second RIV is used to determine a first starting RB set and a first set of RB sets length; and the first starting RB set and the first set of RB sets length are used to determine the first set of RB sets.

As one sub-embodiment of the above embodiment, the first set of RB sets starts from the first starting RB set, and the number of RB sets allocated to the first set of RB sets is equal to the first set of RB sets length.

As one reference embodiment of the above embodiment, the second RIV is equal to $N4$(a first set of RB sets length - 1) + a first starting RB set, or, the second RIV is equal to $N4(N4$ - a first set of RB sets length + 1) + ($N4$ - 1 - a first

starting RB set), and the N4 is equal to the number of RB sets comprised in the second BWP.

As one embodiment, the second bit width depends on whether the first symbol set overlaps with a given time domain resource, the given time domain resource is default, and the given time domain resource comprises a plurality of symbols.

As one embodiment, the second bit width depends on whether the first symbol set belongs to a given time domain resource, the given time domain resource is default, and the given time domain resource comprises a plurality of symbols.

As one embodiment, the meaning of the default comprises: no configuration is required.

As one embodiment, the meaning of the default means comprises: being fixed.

As one embodiment, a system frame number (SFN) of a frame to which any symbol in the given time domain resource belongs belongs to a first frame number set, a slot number of a slot to which any symbol in the given time domain resource belongs belongs to a first slot number set, and a corresponding symbol number belongs to a first symbol number set; the first frame number set comprises at least one system frame number, the first slot number set comprises at least one slot number, and the first symbol number set comprises at least one symbol number; and the first frame number set, the first slot number set and the first symbol number set are default respectively.

As one embodiment, the first signaling is transmitted on a physical downlink control channel (PDCCH).

As one embodiment, the first node receives the first signal in the first symbol set, and the first signal is transmitted on a PDSCH.

As one embodiment, the first node sends the first signal in the first symbol set, and the first signal is transmitted on a PUSCH.

### Embodiment 2

Embodiment 2 illustrates a schematic diagram of a network architecture according to one embodiment of the present application, as shown in Figure 2.

Figure 2 illustrates a network architecture of long-term evolution (LTE), long-term evolution advanced (LTE-A) and future 5G systems. The network architecture of the LTE, LTE-A and future 5G systems is called an evolved packet system (EPS). The 5G NR or LTE network architecture may be referred to as a 5G system (5GS)/EPS 200 or some other suitable terminologies. The 5GS/EPS 200 may comprise one or more UE 201, UE 241 performing sidelink communication with the UE 201, a next generation radio access network (NG-RAN) 202, a 5G core network (5G-CN)/evolved packet core (EPC) 210, home subscriber server (HSS)/unified data management (UDM) 220 and an Internet service 230. The 5GS/EPS 200 may be interconnected with other access networks, but these entities/interfaces are not shown for simplicity. As shown in Figure 2, the 5GS/EPS 200 provides a packet switching service, however, those skilled in the art will readily appreciate that the various concepts presented throughout the present application may be extended to networks providing circuit switching services. The NG-RAN 202 comprises an NR Node B (gNB) 203 and other gNBs 204. The gNB 203 provides user and control plane protocol termination towards the UE 201. The gNB 203 may be connected to the other gNBs 204 via an Xn interface (e.g., backhaul). The gNB 203 may also be referred to as a base station, a base transceiving station, a radio base station, a radio transceiving device, a transceiving device function, a basic service set (BSS), an extended service set (ESS), a transmitter receiver point (TRP), or some other suitable terminologies. The gNB 203 provides an access point to the 5G-CN/EPC 210 for the UE 201. Instances of the UE 201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB 203 is connected to the 5G-CN/EPC 210 via an S1/NG interface. The 5G-CN/EPC 210 comprises a mobility management entity (MME)/authentication management field (AMF)/session management function (SMF) 211, other MME/AMEF/SMFs 214, a service gateway (S-GW)/user plane function (UPF) 212, and a packet data network gateway (P-GW)/UPF 213. The MME/AMF/SMF 211 is a control node that handles signalings between the UE 201 and the 5G-CN/EPC 210. Generally, the MME/AMF/SMF 211 provides bearer and connection management. All user Internet protocol (IP) packets are transmitted through the S-GW/UPF 212, which is itself connected to the P-GW/UPF 213. P-GW provides UE IP address allocation and other functions. The P-GW/UPF 213 is connected to the Internet service 230. The Internet service 230 comprises operator-corresponding Internet protocol services, which may specifically comprise Internet, Intranet, IP multimedia subsystem (IMS) and packet switching services.

As one embodiment, the first node in the present application comprises the UE 201.

As one embodiment, the second node in the present application comprises the gNB 203.

As one embodiment, a wireless link between the UE 201 and the gNB 203 comprises a cellular network link.

As one embodiment, a sender of the first signaling comprises the gNB 203.

As one embodiment, a recipient of the first signaling comprises the UE 201.

As one embodiment, a sender of the first information block comprises the gNB 203.

As one embodiment, a recipient of the first information block comprises the UE 201.

As one embodiment, a sender of the first signal comprises the gNB 203.

As one embodiment, a recipient of the first signal comprises the UE 201.

As one embodiment, the sender of the first signal comprises the UE 201.

As one embodiment, the recipient of the first signal comprises the gNB 203.

As one embodiment, the gNB 203 supports SBFD.

As one embodiment, the gNB 203 supports a more flexible duplex mode or a full-duplex mode.

As one embodiment, the UE 201 supports SBFD.

As one embodiment, the UE 201 supports a more flexible duplex mode or a full-duplex mode.

As one embodiment, the UE 201 supports a plurality of BWPs.

As one embodiment, the UE 201 supports switching of active BWPs based on DCI.

**Embodiment 3**

Embodiment 3 illustrates a schematic diagram of an embodiment of a wireless protocol architecture of a user plane and a control plane according to one embodiment of the present application, as shown in Figure 3.

Figure 3 is a schematic diagram illustrating an embodiment of a radio protocol architecture for a user plane 350 and a control plane 300, and Figure 3 shows a radio protocol architecture for the control plane 300 between a first communication node device (a road side unit (RSU) in UE or vehicle to everything (V2X), a vehicle-mounted device or a vehicle-mounted communication module) and a second node device (a gNB, an RSU in UE or V2X, a vehicle-mounted device or a vehicle-mounted communication module), or between two pieces of UE using three layers: Layer 1 (L1), Layer 2 (L2) and Layer 3 (L3). L1 is the lowest layer and implements various physical layer (PHY) signal processing functions. L1 will be referred to as PHY 301 herein. L2 305 is above the PHY 301 and is responsible for links between a first node device and a second node device or between two pieces of UE through the PHY 301. L2 305 comprises a MAC sublayer 302, a radio link control (RLC) sublayer 303 and a packet data convergence protocol (PDCP) sublayer 304, which terminate at a second node device. The PDCP sublayer 304 provides multiplexing between different radio bearers and logical channels. The PDCP sublayer 304 also provides security by encrypting data packets and provides handover support for the first communication node device between second communication node devices. The RLC sublayer 303 provides segmentation and reassembly of upper layer data packets, retransmission of lost data packets, and reordering of data packets to compensate for out-of-order reception due to a HARQ. The MAC sublayer 302 provides multiplexing between logical and transport channels. The MAC sublayer 302 is also responsible for allocating various radio resources (e.g., resource blocks) in one cell between first communication node devices. The MAC sublayer 302 is also responsible for HARQ operations. An RRC sublayer 306 in L3 in the control plane 300 is responsible for obtaining radio resources (i.e., radio bearers) and configuring lower layers using an RRC signaling between the second communication node device and the first communication node device. The radio protocol architecture for the user plane 350 comprises Layer 1 (L1) and Layer 2 (L2). The radio protocol architecture for the first communication node device and the second communication node device in the user plane 350 is substantially the same as the corresponding layers and sublayers in the control plane 300 as for a physical layer 351, a PDCP sublayer 354 in L2 355, an RLC sublayer 353 in L2 355, and a MAC sublayer 352 in L2 355, but the PDCP sublayer 354 also provides header compression for upper layer data packets to reduce the radio transmission overhead. L2 355 in the user plane 350 also comprises a service data adaptation protocol (SDAP) sublayer 356, which is responsible for mapping between quality of service (QoS) flows and data radio bearers (DRBs) to support the diversity of services. Although not shown, the first communication node device may have several upper layers above L2 355, comprising a network layer (e.g., IP layer) terminated at the P-GW on the network side and an application layer terminated at the other end of the connection (e.g., remote UE, servers, etc.).

As one embodiment, the wireless protocol architecture in Figure 3 is applicable to the first node in the present application.

As one embodiment, the wireless protocol architecture in Figure 3 is applicable to the second node in the present application.

As one embodiment, the first signaling is generated at the PHY 301 or the PHY 351.

As one embodiment, the first signaling is generated at the MAC sublayer 302 or the MAC sublayer 352.

As one embodiment, the first signal is generated at the PHY 301 or the PHY 351.

As one embodiment, the higher layer in the present application refers to a layer above a physical layer.

## Embodiment 4

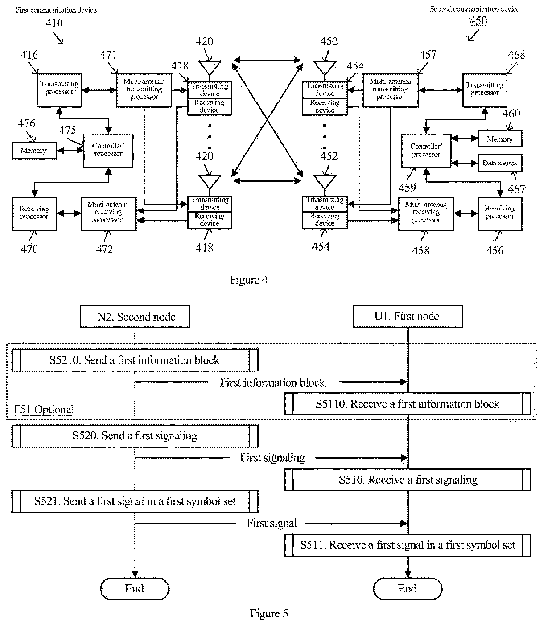

Embodiment 4 illustrates a schematic diagram of a first communication device and a second communication device according to one embodiment of the present application, as shown in Figure 4. Figure 4 is a block diagram of a first communication device 410 and a second communication device 450 communicating with each other in an access network.

The first communication device 410 comprises a controller/processor 475, a memory 476 , a receiving processor 470, a transmitting processor 416, a multi-antenna receiving processor 472, a multi-antenna transmitting processor 471, a transmitting device/receiving device 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

In transmission from the first communication device 410 to the second communication device 450, at the first communication device 410, upper layer data packets from a core network are provided to a controller/processor 475. The controller/processor 475 implements functionality of L2. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signalings to the second communication device 450. The transmitting processor 416 and the multi-antenna transmitting processor 471 implement various signal processing functions for L1 (i.e., physical layer). The transmitting processor 416 implements coding and interlacing to facilitate forward error correction (FEC) at the second communication device 450, as well as mapping of signal constellations based on various modulation schemes (e.g., binary phase shift keying (BPSK), quadrature phase shift keying (QPSK), M-ary phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes a modulated symbol with a reference signal (e.g., pilot) in a time domain and/or frequency domain, and then uses inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides it to a different antenna 420.

In transmission from the first communication device 410 to the second communication device 450, at the second communication device 450, each receiving device 454 receives a signal through its corresponding antenna 452. Each receiving device 454 recovers information modulated onto a radio frequency carrier and converts the radio frequency stream into a baseband multi-carrier symbol stream and provides it to the receiving processor 456. The receiving processor 456 and the multi-antenna receiving processor 458 implement various signal processing functions of L1. The multi-antenna receiving processor 458 performs a receiving analog precoding/beamforming operation on the baseband multi-carrier symbol stream from the receiving device 454. The receiving processor 456 uses fast fourier transform (FFT) to convert the baseband multi-carrier symbol stream after the receiving analog precoding/beamforming operation from a time domain to a frequency domain. In the frequency domain, a data signal and a reference signal of a physical layer are demultiplexed by the receiving processor 456, wherein the reference signal will be used for a channel estimation, and the data signal is recovered after multi-antenna detection in the multi-antenna receiving processor 458 into any parallel stream destined for the second communication device 450. Symbols on each parallel stream are demodulated and recovered in the receiving processor 456, and soft decisions are generated. The receiving processor 456 then decodes and deinterlaces the soft decisions to recover upper layer data and control signals transmitted by the first communication device 410 on the physical channel. The upper layer data and control signals are then provided to the controller/processor 459. The controller/processor 459 implements functions of L2. The controller/processor 459 may be associated with a memory 460 storing program codes and data. The memory 460 may be referred to as a computer-readable medium. In a DL, the controller/processor 459 provides demultiplexing between transport and logical channels, packet reassembly, decryption, header decompression, and control signal processing to recover upper layer data packets from the core network. The upper layer data packets are then provided to all protocol layers above L2. Various control signals may also be provided to L3 for L3 processing. The controller/processor 459 is also responsible for error detection using an Acknowledgement (ACK) and/or Negative Acknowledgement (NACK) protocol to support the HARQ operations.

In transmission from the second communication device 450 to the first communication device 410, at the second communication device 450, the data source 467 is used to provide upper layer data packets to the controller/processor 459. The data source 467 represents all protocol layers above L2. Similar to transmission function at the first communication device 410 described in a DL, the controller/processor 459 implements header compression, encryption, packet segmentation and reordering, and multiplexing between logical and transport channels based on wireless resource allocation of the first communication device 410, and implements L2 functions for the user plane and the control plane. The controller/processor 459 is also responsible for HARQ operations, retransmission of lost packets, and signalings to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then the transmitting processor 468 modulates a generated parallel stream into a multi-carrier/single-carrier symbol stream, which is provided to a different antenna 452 via the transmitting device 454 after analog precoding/beamforming operations in the multi-antenna transmitting processor 457. Each transmitting device 454 first converts a baseband symbol stream provided by the multi-antenna transmitting processor 457 into a radio frequency symbol stream, and then provides it to the antenna 452.

In transmission from the second communication device 450 to the first communication device 410, functions at the first communication device 410 are similar to receiving functions at the second communication device 450 described in transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of L1. The controller/processor 475 implements functions of L2. The controller/processor 475 may be associated with the memory 476 storing program codes and data. The memory 476 may be referred to as a computer-readable medium. The controller/processor 475 provides demultiplexing between transport and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using an ACK and/or NACK protocols to support the HARQ operations.

As one embodiment, the second communication device 450 comprises: at least one processor and at least one memory, the at least one memory comprising a computer program code; and the at least one memory and the computer program code are configured to be used together with the at least one processor. The second communication device 450 apparatus at least receives the first signaling, the first signaling comprising scheduling information of the first signal; and receives the first signal in the first symbol set, or sends the first signal in the first symbol set. The first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

As one embodiment, the second communication device 450 comprises: a memory storing a computer-readable instruction program, and the computer-readable instruction program generates an action when executed by at least one processor, the action comprising: receiving the first signaling; and receiving the first signal in the first symbol set, or sending the first signal in the first symbol set.

As one embodiment, the first communication device 410 comprises: at least one processor and at least one memory, the at least one memory comprising a computer program code; and the at least one memory and the computer program code are configured to be used together with the at least one processor. The first communication device 410 apparatus at least sends the first signaling, the first signaling comprising scheduling information of the first signal; and sends the first signal in the first symbol set, or receives the first signal in the first symbol set. The first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

As one embodiment, the first communication device 410 comprises: a memory storing a computer-readable instruction program, and the computer-readable instruction program generates an action when executed by at least one processor, the action comprising: sending the first signaling; and sending the first signal in the first symbol set, or receiving the first signal in the first symbol set.

As one embodiment, the first node in the present application comprises the second communication device 450.

As one embodiment, the second node in the present application comprises the first communication device 410.

As one embodiment, at least one of {the antenna 420, the transmitting device 418, the transmitting processor 416, the multi-antenna transmitting processor 471, the controller/processor 475, and the memory 476} is used to send the first signaling.

**EP 4 601 373 A1**

As one embodiment, at least one of {the antenna 452, the receiving device 454, the receiving processor 456, the multi-antenna receiving processor 458, the controller/processor 459, the memory 460, and the data source 467} is used to receive the first signaling.

As one embodiment, at least one of {the antenna 420, the transmitting device 418, the transmitting processor 416, the multi-antenna transmitting processor 471, the controller/processor 475, and the memory 476} is used to send the first signal in the first symbol set.

As one embodiment, at least one of {the antenna 452, the receiving device 454, the receiving processor 456, the multi-antenna receiving processor 458, the controller/processor 459, the memory 460, and the data source 467} is used to receive the first signal in the first symbol set.

As one embodiment, at least one of {the antenna 452, the receiving device 454, the receiving processor 456, the multi-antenna receiving processor 458, the controller/processor 459, the memory 460, and the data source 467} is used to send the first signal in the first symbol set.

As one embodiment, at least one of {the antenna 420, the transmitting device 418, the transmitting processor 416, the multi-antenna transmitting processor 471, the controller/processor 475, and the memory 476} is used to receive the first signal in the first symbol set.

As one embodiment, at least one of {the antenna 420, the transmitting device 418, the transmitting processor 416, the multi-antenna transmitting processor 471, the controller/processor 475, and the memory 476} is used to send the first information block.

As one embodiment, at least one of {the antenna 452, the receiving device 454, the receiving processor 456, the multi-antenna receiving processor 458, the controller/processor 459, the memory 460, and the data source 467} is used to receive the first information block.

## Embodiment 5

Embodiment 5 illustrates a flow chart of transmission between a first node and a second node according to one embodiment of the present application, as shown in Figure 5. In Figure 5 , a first node U1 communicates with a second node U2 via a wireless link. In Figure 5, steps in box F51 are optional. It is particularly noted that the order in this embodiment does not limit a signal transmission order and an implementation order in the present application.

For the first node U1, a first information block is received in step S5110; a first signaling is received in step S510; and a first signal is received in a first symbol set in step S511.

For the second node U2, the first information block is sent in step S5210; the first signaling is sent in step S520; and the first signal is sent in the first symbol set in step S521.

In Embodiment 5, the first symbol set comprises at least one symbol; a first BWP is an active BWP, and the first signaling indicates a second BWP; the first signaling comprises a first field and a second field, the first field of the first signaling is used by the first node U1 to determine the first symbol set, and the second field of the first signaling is used by the first node U1 to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

As one embodiment, the first node U1 is the first node in the present application.

As one embodiment, the second node U2 is the second node in the present application.

As one embodiment, an air interface between the second node U2 and the first node U1 comprises a wireless interface between a base station device and user equipment.

As one embodiment, the air interface between the second node U2 and the first node U1 comprises a wireless interface between a relay node device and user equipment.

As one embodiment, the air interface between the second node U2 and the first node U1 comprises a wireless interface between user equipment and user equipment.

As one embodiment, the second node U2 is a serving cell maintenance base station of the first node U1.

As one embodiment, the first signaling is transmitted on a downlink physical layer control channel (i.e., a downlink channel that can only be used to bear physical layer signalings).

As one embodiment, the first signaling is transmitted on a PDCCH.

As one embodiment, the first node U1 receives the first signal in the first symbol set, and the first signal is transmitted on a PDSCH.

As one embodiment, steps in box F51 in Figure 5 exist; and the first information block is used to determine a first time domain resource, or the first information block is used to determine a first time domain resource and a first frequency domain resource.

As one embodiment, the first information block is transmitted on a downlink physical layer data channel (i.e., a downlink channel that can be used to bear physical layer data).

As one embodiment, the first information block is transmitted on a PDSCH.

## Embodiment 6

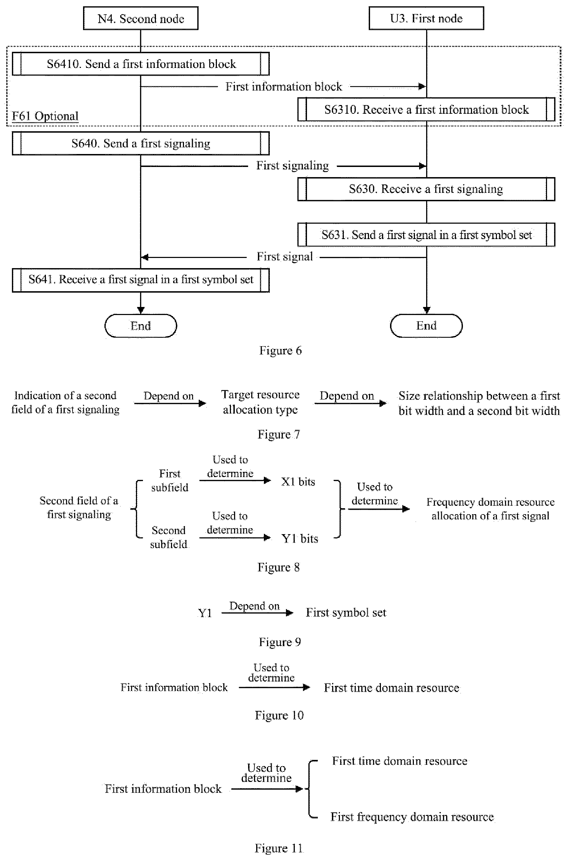

Embodiment 6 illustrates another flow chart of transmission between a first node and a second node according to one embodiment of the present application, as shown in Figure 6. In

Figure 6, a first node U3 communicates with a second node U4 via a wireless link. In Figure 6, steps in box F61 are optional. It is particularly noted that the order in this embodiment does not limit a signal transmission order and an implementation order in the present application.

For the first node U3, a first information block is received in step S63 10; a first signaling is received in step S630; and a first signal is sent in a first symbol set in step S631.

For the second node U4, the first information block is sent in step 6410; the first signaling is sent in step S640; and the first signal is received in the first symbol set in step S641.

In Embodiment 6, the first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

As one embodiment, the first node U3 is the first node in the present application.

As one embodiment, the second node U4 is the second node in the present application.

As one embodiment, an air interface between the second node U4 and the first node U3 comprises a wireless interface between a base station device and user equipment.

As one embodiment, the air interface between the second node U4 and the first node U3 comprises a wireless interface between a relay node device and user equipment.

As one embodiment, the air interface between the second node U4 and the first node U3 comprises a wireless interface between user equipment and user equipment.

As one embodiment, the second node U4 is a serving cell maintenance base station of the first node U3.

As one embodiment, the first node U3 sends the first signal in the first symbol set, and the first signal is transmitted on a PUSCH.

## Embodiment 7

Embodiment 7 illustrates a schematic diagram of an indication of a second field of a first signaling depending on a target allocation type according to one embodiment of the present application, as shown in Figure 7. In Figure 7, an indication of the second field of the first signaling depends on a target resource allocation type, and the target resource allocation type is a first resource allocation type or a second resource allocation type; and the target resource allocation type depends on a size relationship between the first bit width and the second bit width.

As one embodiment, the first resource allocation type is resource allocation type 0, and the second resource allocation type is resource allocation type 1.

As one embodiment, the first resource allocation type and the second resource allocation type are two candidates for the target resource allocation type.

As one embodiment, the target resource allocation type depends on a size relationship between the first bit width and the second bit width only when the first node is configured with a higher layer parameter *"resourceAllocation"* which is set to *"dynamicSwitch"*.

As one embodiment, the target resource allocation type depends on a size relationship between the first bit width and the second bit width only when the first node is configured with a higher layer parameter *"resourceAllocation"* which is set to *"dynamicSwitch"* for the second BWP.

As one embodiment, when the first bit width is less than the second bit width, the target resource allocation type is the first resource allocation type.

As one embodiment, when the first bit width is not less than the second bit width, the target resource allocation type is indicated by the second field of the first signaling.

As one sub-embodiment of the above embodiment, the second field of the first signaling indicates the target resource allocation type from the first resource allocation type and the second resource allocation type.

As one embodiment, when the target resource allocation type is the first resource allocation type, the second field of the first signaling indicates a first bitmap, and the first bitmap indicates RBGs allocated to the first signal.

As one embodiment, a size of any the RBG allocated to the first signal depends on the size of the second BWP.

As one embodiment, a size of any the RBG allocated to the first signal depends on a higher layer parameter "*rbg-*

*size"* and the size of the second BWP.

As one embodiment, the number of bits comprised in the first bitmap depends on the size of the first BWP.

As one embodiment, the number of the bits comprised in the first bitmap depends on a higher layer parameter *"resourceAllocation"* and the size of the first BWP.

As one embodiment, the second BWP comprises N2 RBGs, the first BWP comprises N1 RBGs, and the N2 is greater than the N1; the number of the bits comprised in the first bitmap is equal to N1; the first bitmap indicates whether each RBG in a first RBG subset of the N2 RBGs is allocated to the first signal; and the number of RBGs comprised in the first RBG subset is equal to N1.

As one sub-embodiment of the above embodiment, the N2 RBGs are arranged in order from low to high frequency, and the first RBG subset comprises top N1 RBGs in the N2 RBGs.

As one sub-embodiment of the above embodiment, a size of each RBG in the N2 RBGs depends on the size of the second BWP; and a size of each RBG in the N1 RBGs depends on the size of the first BWP.

As one sub-embodiment of the above embodiment, N1 bits of the first bitmap correspond one-to-one to each RBG in the first RBG subset, and a bit equal to 1 in the N1 bits indicates that the corresponding RBG is an RBG allocated to the first signal.

As one embodiment, when the target resource allocation type is the first resource allocation type, the second field of the first signaling indicates a first RIV, and the first RIV is used to determine a first starting RB and a first RB length; and the first starting RB and the first RB length are used to determine frequency domain resource allocation of the first signal.

As one embodiment, a starting RB allocated to the first signal is the first starting RB, and the number of RBs allocated to the first signal is equal to the first RB length.

As one embodiment, the first RIV is used to determine a first reference starting RB and a first reference RB length, the first starting RB is equal to the first reference starting RB multiplied by a second integer, and the first RB length is equal to the first reference RB length multiplied by the second integer; and the second integer is related to the size of the second BWP.

As one reference embodiment of the above embodiment, the first RIV is equal to $N3$(a first reference RB length - 1) + a first reference starting RB, or, the first RIV is equal to $N3$($N3$ - a first reference RB length + 1) + ($N3$ - 1 - a first reference starting RB), and the $N3$ is equal to a size of a first initial BWP.

As one reference embodiment of the above embodiment, the second integer is equal to the largest positive integer in {1, 2, 4, 8} that is not greater than a rounded value obtained by dividing the size of the second BWP by the size of the first BWP.

As one embodiment, when the target resource allocation type is the second resource allocation type, the second field of the first signaling indicates a first RIV, and the first RIV is used to determine a first starting RBG and a first RBG length; and the first starting RBG and the first RBG length are used to determine frequency domain resource allocation of the first signal.

As one embodiment, a starting RBG allocated to the first signal is the first starting RBG, and the number of RBs allocated to the first signal is equal to the first RBG length.

As one reference embodiment of the above embodiment, the first RIV is equal to $N2$(a first RBG length - 1) + a first starting RBG, or, the first RIV is equal to $N2$($N2$ - a first RBG length + 1) + ($N2$ - 1 - a first starting RBG), and the $N2$ is equal to the number of RBGs comprised in the second BWP.

As one reference embodiment of the above embodiment, a size of any RBG allocated to the first signal depends on one of higher layer parameters *"resourceAllocationType1GranularityDCI-0-2"* or *"resourceAllocationType1GranularityDCI-1-2"*.

As one reference embodiment of the above embodiment, a size of any RBG allocated to the first signal is 1.

As one reference embodiment of the above embodiment, a size of any RBG allocated to the first signal is not less than 2.

As one embodiment, the RB comprises a PRB.

As one embodiment, the RB comprises a VRB.

### Embodiment 8

Embodiment 8 illustrates a schematic diagram of a relationship between a second field of a first signaling and frequency domain resource allocation of a first signal according to one embodiment of the present application, as shown in Figure 8. In Figure 8, the second field of the first signaling comprises a first subfield and a second subfield; the first subfield of the first signaling is used by the first node to determine X1 bits, and the second subfield of the first signaling is used by the first node to determine Y1 bits; X1 and Y1 are positive integers respectively; and the X1 bits and the Y1 bits are used together by the first node to determine frequency domain resource allocation of the first signal.

As one embodiment, the first subfield comprises X most significant bits (MSBs) of the second field, and the second subfield comprises Y least significant bits (LSBs) of the second field; and X and Y are positive integers respectively, and the sum of the X and the Y is equal to the first bit width.

As one embodiment, when subcarrier spacing configuration of the first BWP is equal to 0, and when subcarrier spacing configuration of the second BWP is equal to 1, the X1 is equal to X-1; when subcarrier spacing configuration of the first BWP is equal to 1, and when subcarrier spacing configuration of the second BWP is equal to 0, the X1 is equal to X+1; and when subcarrier spacing configuration of the first BWP is equal to subcarrier spacing configuration of the second BWP, the X1 is equal to X.

As one embodiment, when the X1 is less than the X, the X1 bits are obtained by truncating the first subfield of the first signaling from an MSB.

As one embodiment, when the X1 is less than the X, the X1 bits are obtained by truncating (X-X1) MSBs of the first subfield of the first signaling.

As one embodiment, when the X1 is less than the X, the X1 bits are equal to X1 LSBs of the first subfield of the first signaling.

As one embodiment, when the X1 is greater than the X, the X1 bits are obtained by zero-padding before the first subfield of the first signaling.

As one embodiment, when the X1 is greater than the X, the X1 bits are obtained by (X1-X) zeros-padding before the first subfield of the first signaling.

As one embodiment, when the X1 is greater than the X, (X1-X) MSBs of the X1 bits are equal to 0, and X LSBs of the X1 bits are equal to the first subfield of the first signaling.

As one embodiment, when the X1 is equal to the X, the X1 bits are equal to the first field of the first signaling.

As one embodiment, when the Y1 is less than the Y, the Y1 bits are obtained by truncating the second subfield of the first signaling from an MSB.

As one embodiment, when the Y1 is less than the Y, the Y1 bits are obtained by truncating (Y-Y1) MSBs of the second subfield of the first signaling.

As one embodiment, when the Y1 is less than the Y, the Y1 bits are equal to Y1 LSBs of the second subfield.

As one embodiment, when the Y1 is greater than the Y, the Y1 bits are obtained by zero-padding before the second subfield of the first signaling.

As one embodiment, when the Y1 is greater than the Y, the Y1 bits are obtained by (Y1-Y) zeros-padding before the second subfield of the first signaling.

As one embodiment, when the Y1 is greater than the Y, (Y1-Y) MSBs of the Y1 bits are equal to 0, and Y LSBs of the Y1 bits are equal to the second subfield of the first signaling.

As one embodiment, when the Y1 is equal to the Y, the Y1 bits are equal to the second field of the first signaling.

As one embodiment, the X1 bits indicate a first interlace set, the Y1 bits indicate a first set of RB sets, and the first interlace set and the first set of RB sets are used together to determine frequency domain resource allocation of the first signal.

As one sub-embodiment of the above embodiment, an intersection of the first interlace set and the first set of RB sets is a frequency domain resource allocated to the first signal.

As one embodiment, the X1 bits indicate a first RIV, the first RIV is used to determine a first starting interlace and a first interlace length of the first interlace set, and the first starting interlace and the first interlace length are used together to determine the first interlace set.

As one embodiment, when the first RIV is less than $M(M+1)/2$, a starting interlace comprised in the first interlace set is the first starting interlace, and the number of interlaces allocated to the first interlace set is equal to the first interlace length; when the first RIV is greater than $M(M+1)/2$, the first interlace set is equal to a first starting interlace + $l$; and the $l$ depends on the first starting interlace and the first interlace length, and the M is equal to the maximum number of interlaces that the first interlace set may contain.

As one reference embodiment of the above embodiment, the first RIV is equal to $M$(a first interlace set length - 1) + a first starting interlace, or, the first RIV is equal to $M$(M - a first interlace set length + 1) + (M - 1 - a first starting interlace).

As one reference embodiment of the above embodiment, the M is equal to 5.

As one reference embodiment of the above embodiment, the M refers to Table 4.4.4.6-1 in 3GPP TS38.211 4.4.4.6 (V17.2.0).

As one embodiment, the X1 bits comprise a first bitmap, and the first bitmap indicates an interlace allocated to a first signal.

As one sub-embodiment of the above embodiment, the first bitmap corresponds one-to-one to X1 interlaces in the first interlace set, and a bit equal to 1 in the X1 bits represents that the corresponding interlace is an interlace allocated to the first signal.

As one embodiment, an indication of the X1 bits depends on subcarrier spacing configuration of the second BWP.

As one embodiment, the Y1 bits indicate a first set of RB sets.

As one embodiment, the Y1 bits indicate a second RIV, and the second RIV is used to determine a first starting RB set and a first set of RB sets length; and the first starting RB set and the first set of RB sets length are used to determine the first set of RB sets.

As one sub-embodiment of the above embodiment, the first set of RB sets starts from the first starting RB set, and the number of RB sets allocated to the first set of RB sets is equal to the first set of RB sets length.

As one reference embodiment of the above embodiment, the second RIV is equal to $N4$(a first set of RB sets length - 1) + a first starting RB set, or, the second RIV is equal to $N4$($N4$ - a first set of RB sets length + 1) + ($N4$ - 1 - a first starting RB set), and the N4 is equal to the number of RB sets comprised in the second BWP.

## Embodiment 9

Embodiment 9 illustrates a schematic diagram of Y1 depending on a first symbol set according to one embodiment of the present application, as shown in Figure 9.

As one embodiment, a value of the Y1 varies with the first symbol set.

As one embodiment, the Y1 depends on the first symbol set.

As one embodiment, the Y1 depends on whether the first symbol set overlaps with the given time domain resource described in Embodiment 1.

As one embodiment, when the first symbol set overlaps with the given time domain resource, a value of the Y1 is not equal to a value of the Y1 when the first symbol set and the given time domain resource are orthogonal.

As one embodiment, the Y1 depends on whether the first symbol set belongs to the given time domain resource.

As one embodiment, when the first symbol set belongs to the given time domain resource, a value of the Y1 is not equal to a value of the Y1 when the first symbol set comprises at least one symbol that does not belong to the given time domain resource.

As one embodiment, when the first symbol set and the given time domain resource are orthogonal, the Y1 is equal to a base-2 logarithm of a third parameter and rounded up, and the third parameter is related to the size of the second BWP.

As one sub-embodiment of the above embodiment, the third parameter is equal to a size of a second BWP · (a size of a second BWP + 1)/2.

As one sub-embodiment of the above embodiment, the third parameter is equal to $N4 \cdot (N4 + 1)/2$, and the N4 is equal to the number of RB sets comprised in the second BWP.

As one reference embodiment of the above embodiment, when the first symbol set and the given time domain resource are orthogonal, the Y1 is equal to

$$\lceil log_2(\text{a size of a second BWP (a size of a second BWP} + 1)/2)\rceil$$

As one reference embodiment of the above embodiment, when the first symbol set and the given time domain resource are orthogonal, the Y1 is equal to $\lceil log_2(N4(N4 + 1)/2)\rceil$, and the N4 is equal to the number of RB sets comprised in the second BWP.

As one embodiment, when there is at least one symbol in the first symbol set that does not belong to the given time domain resource, the Y1 is equal to a base-2 logarithm of a third parameter and rounded up, and the third parameter is related to the size of the second BWP.

As one sub-embodiment of the above embodiment, the third parameter is equal to a size of a second BWP · (a size of a second BWP + 1)/2.

As one sub-embodiment of the above embodiment, the third parameter is equal to $N4 \cdot (N4 + 1)/2$, and the N4 is equal to the number of RB sets comprised in the second BWP.

As one reference embodiment of the above embodiment, when there is at least one symbol in the first symbol set that does not belong to the given time domain resource, the Y1 is equal to $\lceil log_2$(a size of a second BWP(a size of a second BWP + 1)/2)$\rceil$.

As one reference embodiment of the above embodiment, when there is at least one symbol in the first symbol set that does not belong to the given time domain resource, the Y1 is equal to $\lceil log_2(N4(N4 + 1)/2)\rceil$, and the N4 is equal to the number of RB sets comprised in the second BWP.

As one embodiment, when the first symbol set overlaps with the given time domain resource, the Y1 is default.

As one embodiment, when the first symbol set overlaps with the given time domain resource, the Y1 is equal to $\lceil log_2(P(P + 1)/2)\rceil$, and the P is a size of a given frequency domain resource; and the given frequency domain resource is default.

## Embodiment 10

Embodiment 10 illustrates a schematic diagram of a first information block being used to determine a first time domain resource according to one embodiment of the present application, as shown in Figure 10.

As one embodiment, the first information block is used by the first node to determine the first time domain resource.

As one embodiment, the first information block is carried by a higher layer signaling.

As one embodiment, the first information block is carried by a radio resource control (RRC) signaling.

As one embodiment, the first information block comprises information in all or part of fields in one RRC information element (IE).

As one embodiment, the first information block comprises information in all or part of fields in a *TDD-UL-DL-ConfigCommon* IE.

As one embodiment, the first information block comprises information in all or part of fields in a *TDD-UL-DL-ConfigDedicated* IE.

As one embodiment, the first information block is carried by one RRC IE.

As one sub-embodiment of the above embodiment, a name of an IE carrying the first information block comprises "*TDD-UL-DL-Config*".

As one sub-embodiment of the above embodiment, a name of an IE carrying the first information block comprises "*ServingCellConfig*".

As one embodiment, the first information block is carried by a *TDD-UL-DL-ConfigCommon* IE.

As one embodiment, the first information block is carried by a *TDD-UL-DL-ConfigDedicated* IE.

As one embodiment, the first information block is carried by a *ServingCellConfig* IE.

As one embodiment, the first information block is carried by a *ServingCellConfigCommon* IE.

As one embodiment, the first information block is carried by a *ServingCellConfigCommonSIB* IE.

As one embodiment, the first information block is carried by a medium access control layer control element (MAC CE).

As one embodiment, the first information block is carried by a physical layer signaling.

As one embodiment, the first information block is carried by DCI.

As one embodiment, the first information block comprises information in one or more fields in a piece of DCI.

As one embodiment, the first information block is carried by DCI of DCI format 2_0.

As one embodiment, the first information block configures symbols in the first time domain resource as a third type.

As one embodiment, the first information block configures symbols in the first time domain resource as the third type in a cell where the first signal is located.

As one embodiment, the first information block configures symbols in the first time domain resource as the third type in a cell group where the first signal is located.

As one embodiment, the first information block configures symbols in the first time domain resource as the third type in one BWP of a cell where the first signal is located.

As one embodiment, the first information block configures symbols in the first time domain resource as the third type in the second BWP.

As one embodiment, the meaning of the sentence "the first information block is used to determine a first time domain resource" comprises: the first information block configures symbols in the first time domain resource as the third type.

As one embodiment, the meaning of the sentence "the first information block is used to determine a first time domain resource" comprises: the first information block configures each symbol in the first time domain resource as the third type.

As one embodiment, the meaning of the sentence "the first information block is used to determine a first time domain resource" comprises: the first information block indicates a type of each symbol in the first time domain resource.

As one embodiment, the meaning of the sentence "the first information block is used to determine a first time domain resource" comprises: the first information block indicates that a type of each symbol in the first time domain resource is the third type.

As one embodiment, the meaning of the sentence "the first information block is used to determine a first time domain resource" comprises: the first information block configures at least one symbol in the first time domain resource as the third type.

As one embodiment, the meaning of the sentence "configure symbols in the first time domain resource as a third type" comprises: each symbol in the first time domain resource is configured as the third type.

As one embodiment, the meaning of the sentence "configure symbols in the first time domain resource as a third type" comprises: at least one symbol in the first time domain resource is configured as the third type.

As one embodiment, the meaning of the sentence "configure symbols in the first time domain resource as a third type" comprises: a type of symbols in the first time domain resource is configured as the third type.

As one embodiment, the meaning of the sentence "configure symbols in the first time domain resource as a third type" comprises: a type of each symbol in the first time domain resource is configured as the third type.

As one embodiment, the meaning of the sentence "configure symbols in the first time domain resource as a third type" comprises: a type of at least one symbol in the first time domain resource is configured as the third type.

As one embodiment, if one symbol is configured as the third type, a sender of the first signaling simultaneously receives and sends wireless signals on the one symbol.

As one embodiment, if one symbol is not configured as the third type, a sender of the first signaling only receives or only sends wireless signals on the one symbol.

As one embodiment, the third type is one type in a first type set, any one symbol is configured as one type in the first type set, and types in the first type set comprise the third type, an uplink and a downlink.

As one sub-embodiment of the above embodiment, types in the first type set comprise flexible.

As one embodiment, the third type is different from an uplink and a downlink.

As one embodiment, the third type is different from an uplink, a downlink and flexible.

**Embodiment 11**

Embodiment 11 illustrates a schematic diagram of a first information block being used to determine a first time domain resource and a first frequency domain resource according to one embodiment of the present application, as shown in Figure 11.

As one embodiment, the first information block is used by the first node to determine the first time domain resource and the first frequency domain resource.

As one embodiment, the first information block is used to determine the first time domain resource and the first frequency domain resource.

As one embodiment, the first information block indicates the first time domain resource and the first frequency domain resource.

As one embodiment, the first information block is used to determine only the first time domain resource in the first time domain resource and the first frequency domain resource.

As one embodiment, the first information block indicates only the first time domain resource in the first time domain resource and the first frequency domain resource.

As one embodiment, the first frequency domain resource comprises a plurality of RBs.

As one embodiment, the first frequency domain resource comprises a plurality of continuous RBs.

As one embodiment, the first frequency domain resource comprises a plurality of discontinuous RBs.

As one embodiment, the first frequency domain resource is used for a link in an opposite direction to the first signal.

As one embodiment, the first node receives the first signal in the first symbol set, and the first frequency domain resource is used for an uplink.

As one embodiment, the first node sends the first signal in the first symbol set, and the first frequency domain resource is used for a downlink.

As one embodiment, the first frequency domain resource comprises a first frequency domain sub-resource and a second frequency domain sub-resource, and the first frequency domain sub-resource and the second frequency domain sub-resource each comprises a plurality of continuous RBs, with at least one RB existing between the first frequency domain sub-resource and the second frequency domain sub-resource that belongs to neither the first frequency domain sub-resource nor the second frequency domain sub-resource.

As one embodiment, the first information block indicates a starting RB of the first frequency domain resource and the number of RBs comprised in the first frequency domain resource.

As one embodiment, the first information block configures symbols in the first time domain resource as a first type in the first frequency domain resource.

As one embodiment, the first node receives the first signal in the first symbol set, and the first type is an uplink.

As one embodiment, the first node sends the first signal in the first symbol set, and the first type is a downlink.

As one embodiment, the first frequency domain resource comprises a guard band.

As one embodiment, the first information block indicates a second frequency domain resource, and the first frequency domain resource comprises RBs in the second BWP that do not belong to the second frequency domain resource.

As one embodiment, the first frequency domain resource comprises all RBs in the second BWP that do not belong to the second frequency domain resource.

As one embodiment, the first frequency domain resource comprises part of RBs in the second BWP that do not belong to the second frequency domain resource.

As one embodiment, the second frequency domain resource comprises a plurality of RBs.

As one embodiment, the second frequency domain resource comprises a plurality of continuous RBs.

As one embodiment, the first information block indicates a starting RB of the second frequency domain resource and the number of RBs comprised in the second frequency domain resource.

As one embodiment, the second frequency domain resource is used for a link in the same direction as the first signal.

As one embodiment, the first information block configures symbols in the first time domain resource as a second type in the second frequency domain resource.

As one embodiment, the first node receives the first signal in the first symbol set, and the second type is a downlink.

As one embodiment, the first node sends the first signal in the first symbol set, and the second type is an uplink.

As one embodiment, the first information block configures symbols in the first time domain resource as a first type in the first frequency domain resource and as a second type in the second frequency domain resource.

As one embodiment, the first node receives the first signal in the first symbol set, the first type is an uplink, and the second type is a downlink.

As one embodiment, the first node sends the first signal in the first symbol set, the first type is a downlink, and the second type is an uplink.

As one embodiment, the first information block indicates the first frequency domain resource by indicating the second frequency domain resource.

As one embodiment, the first information block is transmitted on a PDSCH.


## Embodiment 12

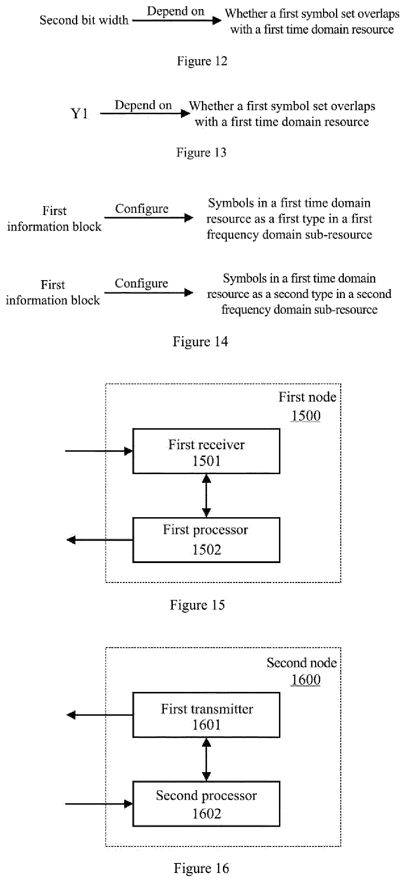

Embodiment 12 illustrates a schematic diagram of a second bit width depending on whether a first symbol set overlaps with a first time domain resource according to one embodiment of the present application, as shown in Figure 12. In Figure 12, the second bit width depends on whether the first symbol set overlaps with the first time domain resource; and when the first symbol set overlaps with the first time domain resource, a size of frequency domain resources in a second BWP excluding the first frequency domain resource is used by the first node to determine the second bit width.

As one embodiment, the size of frequency domain resources in the second BWP excluding the first frequency domain resource is equal to the number of RBs comprised in frequency domain resources in the second BWP excluding the first frequency domain resource.

As one embodiment, the size of frequency domain resources in the second BWP excluding the first frequency domain resource is equal to the size of the second BWP minus the number of RBs in the second BWP belonging to the first frequency domain resource.

As one embodiment, the size of frequency domain resources in the second BWP excluding the first frequency domain resource is equal to the number of RBs in the second BWP that do not belong to the first frequency domain resource.

As one embodiment, the second bit width depends on the size of frequency domain resources in the second BWP excluding the first frequency domain resource.

As one embodiment, the second bit width varies with the size of frequency domain resources in the second BWP excluding the first frequency domain resource.

As one embodiment, when the size of frequency domain resources in the second BWP excluding the first frequency domain resource is equal to C1, the second bit width is equal to D1; when the size of frequency domain resources in the second BWP excluding the first frequency domain resource is equal to C2, the second bit width is equal to D2; and the C1 is greater than the C2, and the D1 is not less than the D2.

As one embodiment, the meaning of "the second bit width depends on whether the first symbol set overlaps with the first time domain resource" comprises: the second bit width depends on whether the first symbol set belongs to the first time domain resource.

As one embodiment, the meaning of "the second bit width depends on whether the first symbol set overlaps with the first time domain resource" comprises: the second bit width depends on whether the first symbol set comprises at least one symbol belonging to the first time domain resource.

As one embodiment, the meaning of "the second bit width depends on whether the first symbol set overlaps with the first time domain resource" comprises: the second bit width depends on whether each symbol in the first symbol set belongs to the first time domain resource.

As one embodiment, when the first symbol set is orthogonal to the first time domain resource, the second bit width depends on the size of the second BWP.

As one embodiment, when the first symbol set is orthogonal to the first time domain resource, the second bit width is independent of a size of the first frequency domain resource.

As one embodiment, when there is one symbol in the first symbol set that does not belong to the first time domain resource, the second bit width depends on the size of the second BWP.

As one embodiment, when there is one symbol in the first symbol set that does not belong to the first time domain resource, the second bit width is independent of a size of the first frequency domain resource.

As one embodiment, when the first symbol set is orthogonal to the first time domain resource, the second bit width is equal to a second target RBG number, and the second target RBG number depends on the size of the second BWP.

As one embodiment, the second target RBG number is equal to the sum of the size of the second BWP and a fourth parameter divided by a second nominal RBG size and rounded up, wherein the fourth parameter is related to an index of a starting RB of the second BWP and the second nominal size; and the second nominal RBG size depends on a higher layer parameter "*rgb-Size*" and the size of the second BWP.

As one sub-embodiment of the above embodiment, an index of the starting RB of the second BWP refers to: on common RB grid, in relation to CRB #0.

As one sub-embodiment of the above embodiment, the fourth parameter is equal to modulo obtained by dividing an index of the starting RB of the second BWP by the second nominal RBG size.

As one embodiment, when the first symbol set is orthogonal to the first time domain resource, the second target RBG number is equal to ⌈(a size of a second BWP + (an index of a starting RB of a second BWP *mod* a second nominal RBG size))/ a second nominal RBG size⌉.

As one embodiment, when the first symbol set is orthogonal to the first time domain resource, the second bit width is equal to a base-2 logarithm of a fifth parameter and rounded up, and the fifth parameter depends on the size of the second BWP.

As one sub-embodiment of the above embodiment, the fifth parameter is equal to a size of a second BWP · (a size of a second BWP + 1)/2.

As one sub-embodiment of the above embodiment, the fifth parameter is equal to a second reference RBG number · (a second reference RBG number + 1)/2 ; the second reference RBG number is equal to

$$\left\lceil (\text{a size of a second BWP} + \quad (\text{an index of a starting RB of a second BWP } mod\ K))/K2 \right\rceil$$

; and the $K2$ depends on one of higher layer parameters *"resourceAllocationType1GranularityDCI-0-2"* and *"resourceAllocationType1GranularityDCI-1-2"*.

As one embodiment, when the first symbol set is orthogonal to the first time domain resource, the second bit width is equal to ⌈*log₂*(a size of a second BWP · (a size of a second BWP + 1)/2)⌉.

As one embodiment, when the first symbol set is orthogonal to the first time domain resource, the second bit width is equal to ⌈*log₂*(a second reference RBG number · (a second reference RBG number + 1)/2)⌉.

As one embodiment, when the first symbol set is orthogonal to the first time domain resource, the second bit width is equal to the sum of the maximum value of the second target RBG number and a third integer plus 1, and the third integer depends on the size of the second BWP.

As one sub-embodiment of the above embodiment, the third integer is

$$\left\lceil log_2 (\text{a size of a second BWP} \cdot (\text{a size of a second BWP} + 1)/2) \right\rceil$$

.

As one sub-embodiment of the above embodiment, the third integer is

$$\left\lceil log_2 (\text{a second reference RBG number} \cdot (\text{a second reference RBG number} + 1)/2) \right\rceil$$

; the second reference RBG number is equal to

$$\left\lceil (\text{a size of a second BWP} + \right.$$ ⌈(a size of a second BWP +

$$\left. (\text{an index of a starting RB of a second BWP } mod\ K2))/K2 \right\rceil$$

; and the K2 depends on one of higher layer parameters *"resourceAllocationType1GranularityDCI-0-2"* and *"resourceAllocationType1GranularityDCI-1-2"*.

As one embodiment, when the first symbol set is orthogonal to the first time domain resource, the second bit width is equal to *max*(⌈*log₂*(a size of a second BWP · (a size of a second BWP + 1)/2)⌉, a second target RBG number) + 1.

As one embodiment, when the first symbol set is orthogonal to the first time domain resource, the second bit width is equal to *max*(⌈*log₂*(a second reference RBG number · (a second reference RBG number + 1)/2)⌉, a second target RBG number) + 1.

As one embodiment, when there is at least one symbol in the first symbol set that does not belong to the first time domain resource, the second bit width is equal to the second target RBG number, and the second target RBG number depends on the size of the second BWP.

As one embodiment, when there is at least one symbol in the first symbol set that does not belong to the first time domain resource, the second target RBG number is equal to ⌈(a size of a second BWP + (an index of a starting RB of a second BWP *mod* a second nominal RBG size))/ a second nominal RBG size⌉.

As one embodiment, when there is at least one symbol in the first symbol set that does not belong to the first time domain resource, the second bit width is equal to a base-2 logarithm of a second parameter and rounded up, and the fifth parameter depends on the size of the second BWP.

As one sub-embodiment of the above embodiment, the fifth parameter is equal to a size of a second BWP · (a size of a second BWP + 1)/2.

As one sub-embodiment of the above embodiment, the fifth parameter is equal to a second reference RBG number · (a second reference RBG number + 1)/2 ; the second reference RBG number is equal to ⌈(a size of a second BWP + (an index of a starting RB of a second BWP *mod K*))/$K2$⌉; and the K2 depends on one of higher layer parameters *"resourceAllocationType1GranularityDCI-0-2"* and *"resourceAllocationType1GranularityDCI-1-2".*

As one embodiment, when there is at least one symbol in the first symbol set that does not belong to the first time domain resource, the second bit width is equal to ⌈$log_2$(a size of a second BWP · (a size of a second BWP + 1)/2)⌉.

As one embodiment, when there is at least one symbol in the first symbol set that does not belong to the first time domain resource, the second bit width is equal to ⌈$log_2$(a second reference RBG number · (a second reference RBG number + 1)/2)⌉.

As one embodiment, when there is at least one symbol in the first symbol set that does not belong to the first time domain resource, the second bit width is equal to the sum of the maximum value of the second target RBG number and a third integer plus 1, and the third integer depends on the size of the second BWP.

As one sub-embodiment of the above embodiment, the third integer is ⌈$log_2$(a size of a second BWP · (a size of a second BWP + 1)/2)⌉.

As one sub-embodiment of the above embodiment, the third integer is ⌈$log_2$(a second reference RBG number · (a second reference RBG number + 1)/2)⌉ ; the second reference RBG number is equal to ⌈(a size of a second BWP + (an index of a starting RB of a second BWP *mod K*2))/$K2$⌉; and the K2 depends on one of higher layer parameters *"resourceAllocation Type1GranularityDCI-0-2"* and *"resourceAllocationType1GranularityDCI-1-2".*

As one embodiment, when there is at least one symbol in the first symbol set that does not belong to the first time domain resource, the second bit width is equal to $max$(⌈$log_2$(a size of a second BWP · (a size of a second BWP + 1)/ 2)⌉, a second target RBG number) + 1.

As one embodiment, when there is at least one symbol in the first symbol set that does not belong to the first time domain resource, the second bit width is equal to

$$max(\lceil log_2(\text{a second reference RBG number} \cdot (\text{a second reference RBG number} + 1)/2)\rceil, \text{a second target RBG number}) + 1$$

As one embodiment, the meaning of "the first symbol set overlaps with the first time domain resource" comprises: the first symbol set belongs to the first time domain resource.

As one embodiment, the meaning of "the first symbol set overlaps with the first time domain resource" comprises: each symbol in the first symbol set belongs to the first time domain resource.

As one embodiment, the meaning of "the first symbol set overlaps with the first time domain resource" comprises: there is at least one symbol in the first symbol set belonging to the first time domain resource.

As one embodiment, when the first symbol set overlaps with the first time domain resource, the second bit width is equal to a second effective RBG number, and the second effective RBG number depends on the size of frequency domain resources in the second BWP excluding the first frequency domain resource.

As one embodiment, when the first symbol set overlaps with the first time domain resource, the second effective RBG number is equal to the second target RBG number minus a third RBG number; the second target RBG number is

equal to $\left\lceil (\text{a size of a second BWP} + \right.$ (an index of a starting RB of a second BWP *mod* a second nominal RBG $\left. \text{a second nominal RBG size})/ \text{a second nominal RBG size} \right\rceil$ ; and the third RBG number is equal to the number of RBGs in the second BWP located within the first frequency domain resource.

As one embodiment, when the first symbol set overlaps with the first time domain resource, the second effective RBG number is equal to ⌈(a size of a second BWP + (an index of a starting RB of a second BWP *mod* a second nominal RBG size))/ a second nominal RBG size⌉ - the number of RBGs in a second BWP located within a first frequency domain resource.

As one embodiment, when the first symbol set overlaps with the first time domain resource, the second bit width is equal to a base-2 logarithm of a fifth parameter and rounded up, and the fifth parameter depends on the size of frequency domain resources in the second BWP excluding the first frequency domain resource.

As one sub-embodiment of the above embodiment, the fifth parameter is equal to R · (R + 1)/2, and the R is the size of frequency domain resources in the second BWP excluding the first frequency domain resource.

As one sub-embodiment of the above embodiment, the fifth parameter is equal to a second effective reference RBG number · (a second effective reference RBG number + 1)/ 2 ; the second effective reference RBG number is equal to $\lceil$R + (an index of a starting RB of a second BWP *mod* K)/K2$\rceil$; and the R is the size of frequency domain resources in the second BWP excluding the first frequency domain resource, and the K2 depends on one of higher layer parameters *"resourceAllocationType1GranularityDCI-0-2"* and *"resourceAllocationType1GranularityDCI-1-2"* .

As one embodiment, when the first symbol set overlaps with the first time domain resource, the second bit width is equal to $\lceil log_2(R \cdot (R + 1)/2)\rceil$, and the R is the size of frequency domain resources in the second BWP excluding the first frequency domain resource.

As one embodiment, when the first symbol set overlaps with the first time domain resource, the second bit width is equal to $\lceil log_2$(a second effective reference RBG number · (a second effective reference RBG number + 1)/2)$\rceil$.

As one embodiment, when the first symbol set overlaps with the first time domain resource, the second bit width is equal to the sum of the maximum value of the second effective RBG number and a third integer plus 1, and the third integer depends on the size of frequency domain resources in the second BWP excluding the first frequency domain resource.

As one sub-embodiment of the above embodiment, the third integer is $\lceil log_2(R \cdot (R + 1)/2)\rceil$, and the R is the size of frequency domain resources in the second BWP excluding the first frequency domain resource.

As one sub-embodiment of the above embodiment, the third integer is $\lceil log_2$(a second effective reference RBG number · (a second effective reference RBG number + 1)/2)$\rceil$; the second effective reference RBG number is equal to

$$\lceil R + (\text{an index of a starting RB of a second BWP } mod \text{ K2})/\text{K2}\rceil$$

; and the R is the size of frequency domain resources in the second BWP excluding the first frequency domain resource, and the K2 depends on one of higher layer parameters "resourceAllocationType1GranularityDCI-0-2" and "resourceAllocationTypeIGranularityDCI-1-2".

As one embodiment, when the first symbol set overlaps with the first time domain resource, the second bit width is equal to max($\lceil log_2(R \cdot (R + 1)/2)\rceil$, a second effective RBG number) + 1.

As one embodiment, when the first symbol set overlaps with the first time domain resource, the second bit width is equal to $$max(\lceil log_2(\text{a second effective reference RBG number } \cdot$$ (a second effective reference RBG number + 1)/2)$\rceil$, a second effective RBG number) + 1.

As one embodiment, when the first symbol set belongs to the first time domain resource, the second bit width is equal to a second effective RBG number, and the second effective RBG number depends on the size of frequency domain resources in the second BWP excluding the first frequency domain resource.

As one embodiment, when the first symbol set belongs to the first time domain resource, the second effective RBG number is equal to the second target RBG number minus a third RBG number; the second target RBG number is equal to $\lceil$(a size of a second BWP + (an index of a starting RB of a second BWP *mod* a second nominal RBG size))/ a second nominal RBG size$\rceil$; and the third RBG number is equal to the number of RBGs in the second BWP located within the first frequency domain resource.

As one embodiment, when the first symbol set belongs to the first time domain resource, the second effective RBG number is equal to $\lceil$(a size of a second BWP + (an index of a starting RB of a second BWP *mod* a second nominal RBG size))/ a second nominal RBG size$\rceil$ - the number of RBGs in a second BWP located within a first frequency domain resource.

As one embodiment, when the first symbol set belongs to the first time domain resource, the second bit width is equal to a base-2 logarithm of a fifth parameter and rounded up, and the fifth parameter depends on the size of frequency domain resources in the second BWP excluding the first frequency domain resource.

As one sub-embodiment of the above embodiment, the fifth parameter is equal to R · (R + 1)/2, and the R is the size of frequency domain resources in the second BWP excluding the first frequency domain resource.

As one sub-embodiment of the above embodiment, the fifth parameter is equal to a second effective reference RBG number · (a second effective reference RBG number + 1)/ 2 ; the second effective reference RBG number is equal to $\lceil$R +

$$(\text{an index of a starting RB of a second BWP } mod \text{ K})/\text{K2}\rceil$$

; and the R is the size of frequency domain resources in the second BWP excluding the first frequency domain resource, and the K2 depends on one of higher layer parameters *"resourceAllocationType1GranularityDCI-0-2"* and *"resourceAllocationType1ranularityDCI-1-2"* .

As one embodiment, when the first symbol set belongs to the first time domain resource, the second bit width is equal to $$\lceil log_2(R \cdot (R + 1)/2)\rceil$$, and the R is the size of frequency domain resources in the second BWP excluding the first frequency domain resource.

As one embodiment, when the first symbol set belongs to the first time domain resource, the second bit width is equal to $$\lceil log_2(\text{a second effective reference RBG number } \cdot$$

$$(\text{a second effective reference RBG number} + 1)/2)\rceil$$

As one embodiment, when the first symbol set belongs to the first time domain resource, the second bit width is equal to the sum of the maximum value of the second effective RBG number and a third integer plus 1, and the third integer depends on the size of frequency domain resources in the second BWP excluding the first frequency domain resource.

As one sub-embodiment of the above embodiment, the third integer is $\lceil log_2(\text{R} \cdot (\text{R} + 1)/2)\rceil$, and the R is the size of frequency domain resources in the second BWP excluding the first frequency domain resource.

As one sub-embodiment of the above embodiment, the third integer is $\lceil log_2(\text{a second effective reference RBG number} \cdot (\text{a second effective reference RBG number} + 1)/2)\rceil$; the second effective reference RBG number is equal to

$$\lceil R + (\text{an index of a starting RB of a second BWP } mod\ K2)/K2\rceil$$

; and the R is the size of frequency domain resources in the second BWP excluding the first frequency domain resource, and the K2 depends on one of higher layer parameters *"resourceAllocationType1GranularityDCI-0-2"* and *"resourceAllocationType1GranularityDCI-1-2"*.

As one embodiment, when the first symbol set belongs to the first time domain resource, the second bit width is equal to $max(\lceil log_2(\text{R} \cdot (\text{R} + 1)/2)\rceil$, a second effective RBG number) + 1.

As one embodiment, when the first symbol set belongs to the first time domain resource, the second bit width is equal to $max(\lceil log_2(\text{a second effective reference RBG number} \cdot (\text{a second effective reference RBG number} + 1)/2)\rceil$, a second effective RBG number) + 1.

### Embodiment 13

Embodiment 13 illustrates a schematic diagram of Y1 depending on whether a first symbol set overlaps with a first time domain resource according to one embodiment of the present application, as shown in Figure 13. In Figure 13, the Y1 depends on whether the first symbol set overlaps with the first time domain resource; and when the first symbol set overlaps with the first time domain resource, a size of frequency domain resources in the second BWP excluding the first frequency domain resource is used by the first node to determine the Y1.

As one embodiment, the meaning of "the Y1 depends on whether the first symbol set overlaps with the first time domain resource" comprises: the Y1 depends on whether the first symbol set belongs to the first time domain resource.

As one embodiment, the meaning of "the Y1 depends on whether the first symbol set overlaps with the first time domain resource" comprises: the Y1 depends on whether the first symbol set comprises at least one symbol belonging to the first time domain resource.

As one embodiment, the meaning of "the Y1 depends on whether the first symbol set overlaps with the first time domain resource" comprises: the Y1 depends on whether each symbol in the first symbol set belongs to the first time domain resource.

As one embodiment, when the first symbol set overlaps with the first time domain resource, a value of the Y1 is not equal to a value of the Y1 when the first symbol set is orthogonal to the first time domain resource.

As one embodiment, when the first symbol set belongs to the first time domain resource, a value of the Y1 is not equal to a value of the Y1 when the first symbol set comprises at least one symbol that does not belong to the first time domain resource.

As one embodiment, when the first symbol set is orthogonal to the first time domain resource, the Y1 depends on the size of the second BWP.

As one embodiment, when the first symbol set is orthogonal to the first time domain resource, the Y1 is independent of a size of the first frequency domain resource.

As one embodiment, when there is one symbol in the first symbol set that does not belong to the first time domain resource, the Y1 depends on the size of the second BWP.

As one embodiment, when there is one symbol in the first symbol set that does not belong to the first time domain resource, the Y1 is independent of a size of the first frequency domain resource.

As one embodiment, when the first symbol set is orthogonal to the first time domain resource, the Y1 is equal to a base-2 logarithm of a third parameter and rounded up, and the third parameter is related to the size of the second BWP.

As one sub-embodiment of the above embodiment, the third parameter is equal to a size of a second BWP · (a size of a second BWP + 1)/2.

As one sub-embodiment of the above embodiment, the third parameter is equal to $N4 \cdot (N4 + 1)/2$, and the N4 is equal to the number of RB sets comprised in the second BWP.

As one reference embodiment of the above embodiment, when the first symbol set is orthogonal to the first time domain resource, the Y1 is equal to $\lceil log_2(\text{a size of a second BWP}(\text{a size of a second BWP} + 1)/2)\rceil$ .

As one reference embodiment of the above embodiment, when the first symbol set is orthogonal to the first time domain resource, the Y1 is equal to $\lceil log_2(N4(N4 + 1)/2)\rceil$ , and the N4 is equal to the number of RB sets comprised in the second BWP.

As one embodiment, when there is at least one symbol in the first symbol set that does not belong to the first time domain resource, the Y1 is equal to a base-2 logarithm of a third parameter and rounded up, and the third parameter is related to the size of the second BWP.

As one sub-embodiment of the above embodiment, the third parameter is equal to a size of a second BWP · (a size of a second BWP + 1)/2.

As one sub-embodiment of the above embodiment, the third parameter is equal to $N4 \cdot (N4 + 1)/2$, and the N4 is equal to the number of RB sets comprised in the second BWP.

As one reference embodiment of the above embodiment, when there is at least one symbol in the first symbol set that does not belong to the first time domain resource, the Y1 is equal to

$$\lceil log_2(\text{a size of a second BWP}(\text{a size of a second BWP} + 1)/2)\rceil$$ .

As one reference embodiment of the above embodiment, when there is at least one symbol in the first symbol set that does not belong to the first time domain resource, the Y1 is equal to $\lceil log_2(N4(N4 + 1)/2)\rceil$ , and the N4 is equal to the number of RB sets comprised in the second BWP.

As one embodiment, the meaning of "the first symbol set overlaps with the first time domain resource" comprises: each symbol in the first symbol set belongs to the first time domain resource.

As one embodiment, the meaning of "the first symbol set overlaps with the first time domain resource" comprises: there is at least one symbol in the first symbol set belonging to the first time domain resource.

As one embodiment, when the first symbol set overlaps with the first time domain resource, the Y1 is equal to a base-2 logarithm of a third parameter and rounded up, and the third parameter is related to the size of frequency domain resources in the second BWP excluding the first frequency domain resource.

As one sub-embodiment of the above embodiment, the third parameter is equal to R · (R + 1)/2, and the R is the size of frequency domain resources in the second BWP excluding the first frequency domain resource.

As one sub-embodiment of the above embodiment, the third parameter is equal to $N5 \cdot (N5 + 1)/2$, and the N4 is equal to the number of RB sets comprised in frequency domain resources in the second BWP excluding the first frequency domain resource.

As one embodiment, when the first symbol set overlaps with the first time domain resource, the Y1 is equal to $\lceil log_2(R \cdot (R + 1)/2)\rceil$ , and the R is the size of frequency domain resources in the second BWP excluding the first frequency domain resource.

As one embodiment, when the first symbol set overlaps with the first time domain resource, the Y1 is equal to $\lceil log_2(N5(N5 + 1)/2)\rceil$ , and the N5 is equal to the number of RB sets comprised in frequency domain resources in the second BWP excluding the first frequency domain resource.

As one embodiment, when the first symbol set belongs to the first time domain resource, the Y1 is equal to a base-2 logarithm of a third parameter and rounded up, and the third parameter is related to the size of frequency domain resources in the second BWP excluding the first frequency domain resource.

As one sub-embodiment of the above embodiment, the third parameter is equal to R · (R + 1)/2, and the R is the size of frequency domain resources in the second BWP excluding the first frequency domain resource.

As one sub-embodiment of the above embodiment, the third parameter is equal to $N5 \cdot (N5 + 1)/2$, and the N5 is equal to the number of RB sets comprised in frequency domain resources in the second BWP excluding the first frequency domain resource.

As one embodiment, when the first symbol set belongs to the first time domain resource, the Y1 is equal to $\lceil log_2(R \cdot (R + 1)/2)\rceil$ , and the R is the size of frequency domain resources in the second BWP excluding the first frequency domain resource.

As one embodiment, when the first symbol set belongs to the first time domain resource, the Y1 is equal to $\lceil log_2(N5(N5 + 1)/2)\rceil$ , and the N5 is equal to the number of RB sets comprised in frequency domain resources in the second BWP excluding the first frequency domain resource.

### Embodiment 14

Embodiment 14 illustrates a schematic diagram of a first information block configuring a type of symbols in a first symbol set according to one embodiment of the present application, as shown in Figure 14. In Figure 14, the first information block configures symbols in the first time domain resource as a first type in a first frequency domain sub-resource, and configures symbols in the first time domain resource as a second type in a second frequency domain sub-resource; the first type and the second type correspond to opposite link directions; and the first frequency domain resource comprises the first frequency domain sub-resource.

As one embodiment, the first frequency domain sub-resource comprises at least one RB.

As one embodiment, the first frequency domain sub-resource comprises a plurality of continuous RBs.

As one embodiment, the first frequency domain sub-resource comprises a plurality of discontinuous RBs.

As one embodiment, the second frequency domain sub-resource comprises at least one RB.

As one embodiment, the second frequency domain sub-resource comprises a plurality of continuous RBs.

As one embodiment, the second frequency domain sub-resource comprises a plurality of discontinuous RBs.

As one embodiment, the first frequency domain sub-resource and the second frequency domain sub-resource are orthogonal to each other.

As one embodiment, the first frequency domain resource is the first frequency domain sub-resource.

As one embodiment, the first frequency domain resource comprises the first frequency domain sub-resource and a guard band.

As one embodiment, the first frequency domain resource consists of the first frequency domain sub-resource and a guard band.

As one embodiment, the second frequency domain resource comprises the second frequency domain sub-resource.

As one embodiment, the second frequency domain resource is the second frequency domain sub-resource.

As one embodiment, the second frequency domain resource comprises the second frequency domain sub-resource and a guard band.

As one embodiment, the second frequency domain resource consists of the second frequency domain sub-resource and a guard band.

As one embodiment, the second frequency domain sub-resource comprises RBs in the second BWP that do not belong to the first frequency domain sub-resource.

As one embodiment, the second frequency domain sub-resource comprises RBs in the second BWP that do not belong to the first frequency domain sub-resource or a guard band.

As one embodiment, the second frequency domain sub-resource consists of all RBs in the second BWP that do not belong to the first frequency domain sub-resource or a guard band.

As one embodiment, the first frequency domain sub-resource comprises RBs in the second BWP that do not belong to the second frequency domain sub-resource.

As one embodiment, the first frequency domain sub-resource comprises RBs in the second BWP that do not belong to the second frequency domain sub-resource or a guard band.

As one embodiment, the first frequency domain sub-resource consists of all RBs in the second BWP that do not belong to the second frequency domain sub-resource or a guard band.

As one embodiment, the first frequency domain resource comprises RBs in the second BWP that do not belong to the second frequency domain sub-resource.

As one embodiment, the first frequency domain resource consists of all RBs in the second BWP that do not belong to the second frequency domain sub-resource.

As one embodiment, the size of frequency domain resources in the second BWP excluding the first frequency domain resource is equal to a size of the second frequency domain sub-resource.

As one embodiment, the first information block indicates the first frequency domain sub-resource.

As one embodiment, the first information block indicates a starting RB of the first frequency domain sub-resource and the number of RBs comprised in the first frequency domain sub-resource.

As one embodiment, the first information block indicates the second frequency domain sub-resource.

As one embodiment, the first information block indicates a starting RB of the second frequency domain sub-resource and the number of RBs comprised in the second frequency domain sub-resource.

As one embodiment, the first information block indicates a guard band.

As one embodiment, the first information block indicates the first frequency domain sub-resource and a guard band.

As one embodiment, the first information block indicates the second frequency domain sub-resource and a guard band.

As one embodiment, the first information block indicates the second frequency domain sub-resource by indicating the first frequency domain sub-resource.

As one embodiment, the first information block indicates the second frequency domain sub-resource by indicating the first frequency domain sub-resource and a guard band.

As one embodiment, the first information block indicates the first frequency domain sub-resource by indicating the second frequency domain sub-resource and a guard band.

As one embodiment, the first information block indicates the first frequency domain resource by indicating the first frequency domain sub-resource.

As one embodiment, the first information block indicates the first frequency domain resource by indicating the first frequency domain sub-resource and a guard band.

As one embodiment, the first information block indicates the first frequency domain resource by indicating the second frequency domain sub-resource.

As one embodiment, the first information block indicates the first frequency domain resource by indicating the second frequency domain sub-resource and a guard band.

As one embodiment, the meaning of the sentence "the first type and the second type correspond to opposite link directions" comprises: the first type is an uplink and the second type is a downlink, or, the first type is a downlink and the second type is an uplink.

As one embodiment, the first node receives the first signal in the first symbol set, the first type is an uplink, and the second type is a downlink.

As one embodiment, the first node sends the first signal in the first symbol set, the first type is a downlink, and the second type is an uplink.

**Embodiment 15**

Embodiment 15 illustrates a structural block diagram of a processing apparatus used in a first node according to one embodiment of the present application, as shown in Figure 15. In Figure 15, the processing apparatus 1500 in the first node comprises a first receiver 1501 and a first processor 1502.

In Embodiment 15, the first receiver 1501 receives a first signaling; and the first processor 1502 receives a first signal in a first symbol set, or sends the first signal in the first symbol set.

In Embodiment 15, the first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

As one embodiment, an indication of the second field of the first signaling depends on a target resource allocation type, and the target resource allocation type is a first resource allocation type or a second resource allocation type; and the target resource allocation type depends on a size relationship between the first bit width and the second bit width.

As one embodiment, the second field of the first signaling comprises a first subfield and a second subfield; the first subfield of the first signaling is used to determine X1 bits, and the second subfield of the first signaling is used to determine Y1 bits; X1 and Y1 are positive integers respectively; the X1 bits and the Y1 bits are used together to determine frequency domain resource allocation of the first signal; and the Y1 depends on the first symbol set.

As one embodiment, the first receiver 1501 receives a first information block, and the first information block is used to determine a first time domain resource, or the first information block is used to determine a first time domain resource and a first frequency domain resource.

As one embodiment, the second bit width depends on whether the first symbol set overlaps with the first time domain resource; and when the first symbol set overlaps with the first time domain resource, a size of frequency domain resources in the second BWP excluding the first frequency domain resource is used to determine the second bit width.

As one embodiment, the first receiver 1501 receives a first information block, the first information block is used to determine a first time domain resource, or the first information block is used to determine a first time domain resource and a first frequency domain resource; the Y1 depends on whether the first symbol set overlaps with the first time domain resource; and when the first symbol set overlaps with the first time domain resource, a size of frequency domain resources in the second BWP excluding the first frequency domain resource is used to determine the Y1.

As one embodiment, the first information block configures symbols in the first time domain resource as a first type in a first frequency domain sub-resource, and configures symbols in the first time domain resource as a second type in a second frequency domain sub-resource; the first type and the second type correspond to opposite link directions; and the first frequency domain resource comprises the first frequency domain sub-resource.

As one embodiment, the first node is user equipment.

As one embodiment, the first node is a relay node device.

As one embodiment, the first information block configures symbols in the first time domain resource as a first type in the first frequency domain resource and as a second type in the second frequency domain resource; the first node receives the first signal in the first symbol set, the first type is an uplink, and the second type is a downlink; and the first node sends the first signal in the first symbol set, the first type is a downlink, and the second type is an uplink.

As one embodiment, the first information block configures symbols in the first time domain resource as a third type; if one symbol is configured as the third type, a sender of the first information block simultaneously receives and sends wireless signals on the one symbol; and if one symbol is not configured as the third type, a sender of the first information block only receives wireless signals or only sends wireless signals on the one symbol.

As one embodiment, when the first symbol set overlaps with the first time domain resource, the second bit width is equal to a second effective RBG number, and the second effective RBG number is equal to the second target RBG number minus a third RBG number; the second target RBG number is equal to $\lceil (\text{a size of a second BWP} + (\text{an index of a starting RB of a second BWP } mod \text{ a second nominal RBG size}))/\text{a second nominal RBG size} \rceil$; and the third RBG number is equal to the number of RBGs in the second BWP located within the first frequency domain resource.

As one embodiment, when the first symbol set overlaps with the first time domain resource, the second bit width is equal to $\lceil log_2(R \cdot (R+1)/2) \rceil$, and the R is the size of frequency domain resources in the second BWP excluding the first frequency domain resource.

As one embodiment, when the first symbol set overlaps with the first time domain resource, the second bit width is equal to $\lceil log_2(\text{a second effective reference RBG number} \cdot (\text{a second effective reference RBG number} + 1)/2) \rceil$; the second effective reference RBG number is equal to $\lceil R + (\text{an index of a starting RB of a second BWP } mod \text{ K})/K2 \rceil$; and the R is the size of frequency domain resources in the second BWP excluding the first frequency domain resource, and the K2 depends on one of higher layer parameters "*resourceAllocationType1GranularityDCI-0-2*" and "*resourceAllocationType1GranularityDCI-1-2*".

As one embodiment, when the first symbol set overlaps with the first time domain resource, the second bit width is equal to $max(\lceil log_2(R \cdot (R+1)/2) \rceil$, a second effective RBG number) + 1, and the R is the size of frequency domain resources in the second BWP excluding the first frequency domain resource.

As one embodiment, when the first symbol set overlaps with the first time domain resource, the second bit width is equal to $max(\lceil log_2(\text{a second effective reference RBG number} \cdot (\text{a second effective reference RBG number} + 1)/2) \rceil$, a second effective RBG number) + 1 , and the second effective reference RBG number is equal to $\lceil R + (\text{an index of a starting RB of a second BWP } mod \text{ K2})/K2 \rceil$; and the R is the size of frequency domain resources in the second BWP excluding the first frequency domain resource, and the K2 depends on one of higher layer parameters "*resourceAllocationType1GranularityDCI-0-2*" and "*resourceAllocationType1GranularityDCI-1-2*".

As one embodiment, when the first symbol set overlaps with the first time domain resource, the Y1 is equal to $\lceil log_2(R \cdot (R+1)/2) \rceil$, and the R is the size of frequency domain resources in the second BWP excluding the first frequency domain resource.

As one embodiment, when the first symbol set overlaps with the first time domain resource, the Y1 is equal to $\lceil log_2(N5(N5+1)/2) \rceil$, and the N5 is equal to the number of RB sets comprised in frequency domain resources in the second BWP excluding the first frequency domain resource.

As one embodiment, the first receiver 1501 comprises at least one of {an antenna 452, a receiving device 454, a receiving processor 456, a multi-antenna receiving processor 458, a controller/processor 459, a memory 460, and a data source 467} in Embodiment 4.

As one embodiment, the first processor 1502 comprises at least one of {an antenna 452, a transmitting device/receiving device 454, a transmitting processor 468, a receiving processor 456, a multi-antenna transmitting processor 457, a multi-antenna receiving processor 458, a controller/processor 459, a memory 460, and a data source 467} in Embodiment 4.

**Embodiment 16**

Embodiment 16 illustrates a structural block diagram of a processing apparatus used in a second node according to one embodiment of the present application, as shown in Figure 16. In Figure 16, the processing apparatus 1600 in the second node comprises a first transmitter 1601 and a second receiver 1602.

In Embodiment 16, the first transmitter 1601 sends a first signaling; and the second processor 1602 sends the first signal in a first symbol set, or receives the first signal in the first symbol set.

In Embodiment 16, the first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

As one embodiment, an indication of the second field of the first signaling depends on a target resource allocation type, and the target resource allocation type is a first resource allocation type or a second resource allocation type; and the target resource allocation type depends on a size relationship between the first bit width and the second bit width.

As one embodiment, the second field of the first signaling comprises a first subfield and a second subfield; the first subfield of the first signaling is used to determine X1 bits, and the second subfield of the first signaling is used to determine Y1 bits; X1 and Y1 are positive integers respectively; the X1 bits and the Y1 bits are used together to determine frequency domain resource allocation of the first signal; and the Y1 depends on the first symbol set.

As one embodiment, the first transmitter 1601 sends a first information block, and the first information block is used to determine a first time domain resource, or the first information block is used to determine a first time domain resource and a first frequency domain resource.

As one embodiment, the second bit width depends on whether the first symbol set overlaps with the first time domain resource; and when the first symbol set overlaps with the first time domain resource, a size of frequency domain resources in the second BWP excluding the first frequency domain resource is used to determine the second bit width.

As one embodiment, the first transmitter 1601 sends a first information block, the first information block is used to determine a first time domain resource, or the first information block is used to determine a first time domain resource and a first frequency domain resource; the Y1 depends on whether the first symbol set overlaps with the first time domain resource; and when the first symbol set overlaps with the first time domain resource, a size of frequency domain resources in the second BWP excluding the first frequency domain resource is used to determine the Y1.

As one embodiment, the first information block configures symbols in the first time domain resource as a first type in a first frequency domain sub-resource, and configures symbols in the first time domain resource as a second type in a second frequency domain sub-resource; the first type and the second type correspond to opposite link directions; and the first frequency domain resource comprises the first frequency domain sub-resource.

As one embodiment, the second node is a base station device.

As one embodiment, the second node is user equipment.

As one embodiment, the second node is a relay node device.

As one embodiment, the first information block configures symbols in the first time domain resource as a first type in the first frequency domain resource and as a second type in the second frequency domain resource; a recipient of the first information block receives the first signal in the first symbol set, the first type is an uplink, and the second type is a downlink; and a recipient of the first information block sends the first signal in the first symbol set, the first type is a downlink, and the second type is an uplink.

As one embodiment, the first information block configures symbols in the first time domain resource as a third type; if one symbol is configured as the third type, the second node simultaneously receives and sends wireless signals on the one symbol; and if one symbol is not configured as the third type, the second node only receives wireless signals or only sends wireless signals on the one symbol.

As one embodiment, when the first symbol set overlaps with the first time domain resource, the second bit width is equal to a second effective RBG number, and the second effective RBG number is equal to the second target RBG number minus a third RBG number; the second target RBG number is equal to $\left\lceil \left(\text{a size of a second BWP} + \left(\text{an index of a starting RB of a second BWP } mod \text{ a second nominal RBG size}\right)\right)/ \text{a second nominal RBG size}\right\rceil$; and the third

RBG number is equal to the number of RBGs in the second BWP located within the first frequency domain resource.

As one embodiment, when the first symbol set overlaps with the first time domain resource, the second bit width is equal to $\lceil log_2(R \cdot (R+1)/2) \rceil$, and the R is the size of frequency domain resources in the second BWP excluding the first frequency domain resource.

As one embodiment, when the first symbol set overlaps with the first time domain resource, the second bit width is equal to $\lceil log_2(\text{a second effective reference RBG number} \cdot (\text{a second effective reference RBG number} + 1)/2) \rceil$; the second effective reference RBG number is equal to $\lceil R + (\text{an index of a starting RB of a second BWP } mod \text{ K})/K2 \rceil$; and the R is the size of frequency domain resources in the second BWP excluding the first frequency domain resource, and the K2 depends on one of higher layer parameters "*resourceAllocationType1GranularityDCI-0-2*" and "*resourceAllocationType1GranularityDCI-1-2*".

As one embodiment, when the first symbol set overlaps with the first time domain resource, the second bit width is equal to $max(\lceil log_2(R \cdot (R+1)/2) \rceil$, a second effective RBG number) + 1, and the R is the size of frequency domain resources in the second BWP excluding the first frequency domain resource.

As one embodiment, when the first symbol set overlaps with the first time domain resource, the second bit width is equal to $max(\lceil log_2(\text{a second effective reference RBG number} \cdot (\text{a second effective reference RBG number} + 1)/2) \rceil$, a second effective RBG number) + 1 , and the second effective reference RBG number is equal to $\lceil R + (\text{an index of a starting RB of a second BWP } mod \text{ K2})/K2 \rceil$; and the R is the size of frequency domain resources in the second BWP excluding the first frequency domain resource, and the K2 depends on one of higher layer parameters "resourceAllocationType1GranularityDCI-0-2" and "resourceAllocationType1GranularityDCI-1-2".

As one embodiment, when the first symbol set overlaps with the first time domain resource, the Y1 is equal to $\lceil log_2(R \cdot (R+1)/2) \rceil$, and the R is the size of frequency domain resources in the second BWP excluding the first frequency domain resource.

As one embodiment, when the first symbol set overlaps with the first time domain resource, the Y1 is equal to $\lceil log_2(N5(N5+1)/2) \rceil$, and the N5 is equal to the number of RB sets comprised in frequency domain resources in the second BWP excluding the first frequency domain resource.

As one embodiment, the first transmitter 1601 comprises at least one of {an antenna 420, a transmitting device 418, a transmitting processor 416, a multi-antenna transmitting processor 471, a controller/processor 475, and a memory 476} in Embodiment 4.

As one embodiment, the second processor 1602 comprises at least one of {an antenna 420, a transmitting device/receiving device 418, a transmitting processor 416, a receiving processor 470, a multi-antenna transmitting processor 471, a multi-antenna receiving processor 472, a controller/processor 475, and a memory 476} in Embodiment 4.

A person skilled in the art can understand that all or part of steps in the above method can be completed by instructing the relevant hardware through a program, and the program can be stored in a computer-readable storage medium, such as a read-only memory, a hard disk or an optical disk. Optionally, all or part of steps in the above embodiment can also be implemented using one or more integrated circuits. Accordingly, each module unit in the above embodiment can be implemented in the form of hardware or in the form of software function modules. The present application is not limited to any specific form of software and hardware combination. The user equipment, terminals and UE in the present application include but are not limited to drones, communication modules on drones, remote-controlled aircrafts, aircrafts, small aircrafts, mobile phones, tablet computers, notebooks, vehicle-mounted communication devices, transportation means, vehicles, RSUs, wireless sensors, Internet cards, Internet of Things terminals, radio frequency identification (RFID) terminals, narrow band Internet of Things (NB-IoT) terminals, machine type communication (MTC) terminals, enhanced MTC (eMTC) terminals, data cards, Internet cards, vehicle-mounted communication devices, low-cost mobile phones, low-cost tablet computers, and other wireless communication devices. The base stations or system devices in the present application include but are not limited to macrocell base stations, microcell base stations, small cell base stations, femtocells, relay base stations, evolved Nodes B (eNBs), gNBs, TRPs, global navigation satellite systems (GNSSs), relay satellites, satellite base stations, aerial base stations, RSUs, drones, test devices, such as transceiving apparatus or signaling testers that simulate some functions of the base stations, and other wireless communication devices.

Those skilled in the art should understand that the present invention can be implemented in other specified forms without departing from its core or basic features. Therefore, the embodiments disclosed at present should be regarded as descriptive rather than restrictive in any way. The scope of the invention is determined by the attached claims rather than the previous description, and all changes within the equivalent meaning and area are considered to be comprised therein.

## Claims

1. A first node for wireless communication, comprising:

   a first receiver, receiving a first signaling, wherein the first signaling comprises scheduling information of a first signal; and
   a first processor, receiving the first signal in a first symbol set, or sending the first signal in the first symbol set, wherein the first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

2. The first node according to claim 1, wherein the indication of the second field of the first signaling depends on a target resource allocation type, and the target resource allocation type is a first resource allocation type or a second resource allocation type; and the target resource allocation type depends on a size relationship between the first bit width and the second bit width.

3. The first node according to claim 1 or 2, wherein the second field of the first signaling comprises a first subfield and a second subfield; the first subfield of the first signaling is used to determine X1 bits, and the second subfield of the first signaling is used to determine Y1 bits; X1 and Y1 are positive integers respectively; the X1 bits and the Y1 bits are used together to determine the frequency domain resource allocation of the first signal; and Y1 depends on the first symbol set.

4. The first node according to any one of claims 1 to 3, comprising:

   the first receiver, receiving a first information block,
   wherein the first information block is used to determine a first time domain resource, or the first information block is used to determine a first time domain resource and a first frequency domain resource.

5. The first node according to claim 4, wherein the second bit width depends on whether the first symbol set overlaps with the first time domain resource; and when the first symbol set overlaps with the first time domain resource, a size of frequency domain resources in the second BWP excluding the first frequency domain resource is used to determine the second bit width.

6. The first node according to claim 3, comprising:

   the first receiver, receiving a first information block, wherein the first information block is used to determine a first time domain resource, or the first information block is used to determine a first time domain resource and a first frequency domain resource,
   wherein Y1 depends on whether the first symbol set overlaps with the first time domain resource; and when the first symbol set overlaps with the first time domain resource, a size of frequency domain resources in the second BWP excluding the first frequency domain resource is used to determine Y1.

7. The first node according to claim 4 or 6, wherein the first information block configures symbols in the first time domain resource as a first type in a first frequency domain sub-resource, and configures the symbols in the first time domain resource as a second type in a second frequency domain sub-resource; the first type and the second type correspond to opposite link directions; and the first frequency domain resource comprises the first frequency domain sub-resource.

8. A second node for wireless communication, comprising:

a first transmitter, sending a first signaling, wherein the first signaling comprises scheduling information of a first signal; and

a second processor, sending the first signal in a first symbol set, or receiving the first signal in the first symbol set, wherein the first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

9. The second node according to claim 8, wherein the indication of the second field of the first signaling depends on a target resource allocation type, and the target resource allocation type is a first resource allocation type or a second resource allocation type; and the target resource allocation type depends on a size relationship between the first bit width and the second bit width.

10. The second node according to claim 8 or 9, wherein the second field of the first signaling comprises a first subfield and a second subfield; the first subfield of the first signaling is used to determine X1 bits, and the second subfield of the first signaling is used to determine Y1 bits; X1 and Y1 are positive integers respectively; the X1 bits and the Y1 bits are used together to determine the frequency domain resource allocation of the first signal; and Y1 depends on the first symbol set.

11. The second node according to any one of claims 8 to 10, wherein the first transmitter sends a first information block, and the first information block is used to determine a first time domain resource, or the first information block is used to determine a first time domain resource and a first frequency domain resource.

12. The second node according to claim 11, wherein the second bit width depends on whether the first symbol set overlaps with the first time domain resource; and when the first symbol set overlaps with the first time domain resource, a size of frequency domain resources in the second BWP excluding the first frequency domain resource is used to determine the second bit width.

13. The second node according to claim 10, wherein the first transmitter sends a first information block, and the first information block is used to determine a first time domain resource, or the first information block is used to determine a first time domain resource and a first frequency domain resource; Y1 depends on whether the first symbol set overlaps with the first time domain resource; and when the first symbol set overlaps with the first time domain resource, a size of frequency domain resources in the second BWP excluding the first frequency domain resource is used to determine Y1.

14. The second node according to claim 11 or 13, wherein the first information block configures symbols in the first time domain resource as a first type in a first frequency domain sub-resource, and configures the symbols in the first time domain resource as a second type in a second frequency domain sub-resource; the first type and the second type correspond to opposite link directions; and the first frequency domain resource comprises the first frequency domain sub-resource.

15. A method used in a first node for wireless communication, comprising:

receiving a first signaling, wherein the first signaling comprises scheduling information of a first signal; and

receiving the first signal in a first symbol set, or sending the first signal in the first symbol set

wherein the first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

16. The method according to claim 15, wherein the indication of the second field of the first signaling depends on a target resource allocation type, and the target resource allocation type is a first resource allocation type or a second resource allocation type; and the target resource allocation type depends on a size relationship between the first bit width and the second bit width.

17. The method according to claim 15 or 16, wherein the second field of the first signaling comprises a first subfield and a second subfield; the first subfield of the first signaling is used to determine X1 bits, and the second subfield of the first signaling is used to determine Y1 bits; X1 and Y1 are positive integers respectively; the X1 bits and the Y1 bits are used together to determine the frequency domain resource allocation of the first signal; and Y1 depends on the first symbol set.

18. The method according to any one of claims 15 to 17, comprising:

receiving a first information block,
wherein the first information block is used to determine a first time domain resource, or the first information block is used to determine a first time domain resource and a first frequency domain resource.

19. The method according to claim 18, wherein the second bit width depends on whether the first symbol set overlaps with the first time domain resource; and when the first symbol set overlaps with the first time domain resource, a size of frequency domain resources in the second BWP excluding the first frequency domain resource is used to determine the second bit width.

20. The method according to claim 17, comprising:

receiving a first information block, wherein the first information block is used to determine a first time domain resource, or the first information block is used to determine a first time domain resource and a first frequency domain resource,
wherein Y1 depends on whether the first symbol set overlaps with the first time domain resource; and when the first symbol set overlaps with the first time domain resource, a size of frequency domain resources in the second BWP excluding the first frequency domain resource is used to determine Y1.

21. The method according to claim 18 or 20, wherein the first information block configures symbols in the first time domain resource as a first type in a first frequency domain sub-resource, and configures the symbols in the first time domain resource as a second type in a second frequency domain sub-resource; the first type and the second type correspond to opposite link directions; and the first frequency domain resource comprises the first frequency domain sub-resource.

22. A method used in a second node for wireless communication, comprising:

sending a first signaling, wherein the first signaling comprises scheduling information of a first signal; and
sending the first signal in a first symbol set, or receiving the first signal in the first symbol set,
wherein the first symbol set comprises at least one symbol; a first BWP is an active BWP, and the first signaling indicates a second BWP; the first signaling comprises a first field and a second field, the first field of the first signaling is used to determine the first symbol set, and the second field of the first signaling is used to determine frequency domain resource allocation of the first signal; a bit width of the second field of the first signaling is a first bit width, and the first bit width depends on a size of the first BWP; and an indication of the second field of the first signaling depends on a second bit width, and the second bit width depends on a size of the second BWP and depends on the first symbol set.

23. The method according to claim 22, wherein the indication of the second field of the first signaling depends on a target resource allocation type, and the target resource allocation type is a first resource allocation type or a second resource allocation type; and the target resource allocation type depends on a size relationship between the first bit width and the second bit width.

24. The method according to claim 22 or 23, wherein the second field of the first signaling comprises a first subfield and a second subfield; the first subfield of the first signaling is used to determine X1 bits, and the second subfield of the first signaling is used to determine Y1 bits; X1 and Y1 are positive integers respectively; the X1 bits and the Y1 bits are used together to determine the frequency domain resource allocation of the first signal; and Y1 depends on the first symbol set.

25. The method according to any one of claims 22 to 24, comprising:

   sending a first information block,
   wherein the first information block is used to determine a first time domain resource, or the first information block is used to determine a first time domain resource and a first frequency domain resource.

26. The method according to claim 25, wherein the second bit width depends on whether the first symbol set overlaps with the first time domain resource; and when the first symbol set overlaps with the first time domain resource, a size of frequency domain resources in the second BWP excluding the first frequency domain resource is used to determine the second bit width.

27. The method according to claim 24, comprising:

   sending a first information block, wherein the first information block is used to determine a first time domain resource, or the first information block is used to determine a first time domain resource and a first frequency domain resource; wherein
   wherein Y1 depends on whether the first symbol set overlaps with the first time domain resource; and when the first symbol set overlaps with the first time domain resource, a size of frequency domain resources in the second BWP excluding the first frequency domain resource is used to determine Y1.

28. The method according to claim 25 or 27, wherein the first information block configures symbols in the first time domain resource as a first type in a first frequency domain sub-resource, and configures the symbols in the first time domain resource as a second type in a second frequency domain sub-resource; the first type and the second type correspond to opposite link directions; and the first frequency domain resource comprises the first frequency domain sub-resource.

100

First node

101

Receive first signaling

102

Receive a first signal in a first symbol set,
or send the first signal in the first symbol set

Figure 1

5GS/EPS
200

220

HSS/UDM

NG-RAN
202

211

214

201

203

MME/AM
F/SMF

Other
MME/AMF/SMF

230

UE

NR node B

204

S-GW/UPF

P-GW/UPF

Internet
service

UE

Other NR
nodes B

5G-CN/EPC
210

212

213

241

Figure 2

Control plane
300

306

L3

RRC

304

L2

PDCP

303

305

RLC

302

L1

MAC

301

PHY

User plane
350

356

SDAP

354

355

L2

PDCP

353

RLC

352

L1

MAC

351

PHY

Figure 3

First communication device
410

416   471   418   420   452   454   457   468

| Transmitting processor | Multi-antenna transmitting processor | Transmitting device / Receiving device | | Transmitting device / Receiving device | Multi-antenna transmitting processor | Transmitting processor |

476   475

| Memory | Controller/ processor |

460

| Controller/ processor | Memory |
| | Data source |

420   452

459   467

| Receiving processor | Multi-antenna receiving processor | Transmitting device / Receiving device | | Transmitting device / Receiving device | Multi-antenna receiving processor | Receiving processor |

470   472   418   454   458   456

Second communication device
450

Figure 4

| N2. Second node | | U1. First node |

S5210. Send a first information block

First information block →

F51 Optional

S5110. Receive a first information block

S520. Send a first signaling

First signaling →

S510. Receive a first signaling

S521. Send a first signal in a first symbol set

First signal →

S511. Receive a first signal in a first symbol set

End          End

Figure 5

| N4. Second node | | U3. First node |
|---|---|---|

S6410. Send a first information block

──────── First information block ────────▶

S6310. Receive a first information block

F61 Optional

S640. Send a first signaling

──────── First signaling ────────▶

S630. Receive a first signaling

S631. Send a first signal in a first symbol set

◀──────── First signal ────────

S641. Receive a first signal in a first symbol set

End                    End

Figure 6

Indication of a second    Depend on    Target resource    Depend on    Size relationship between a first
field of a first signaling  ─────▶      allocation type    ─────▶       bit width and a second bit width

Figure 7

Second field of a
first signaling
{
First subfield    Used to determine ─────▶ X1 bits
Second subfield   Used to determine ─────▶ Y1 bits
}
Used to determine ─────▶ Frequency domain resource allocation of a first signal

Figure 8

Y1 ── Depend on ──▶ First symbol set

Figure 9

First information block ── Used to determine ──▶ First time domain resource

Figure 10

First information block ── Used to determine ──▶ {
First time domain resource
First frequency domain resource
}

Figure 11

39

Second bit width ──Depend on──▶ Whether a first symbol set overlaps with a first time domain resource

Figure 12

Y1 ──Depend on──▶ Whether a first symbol set overlaps with a first time domain resource

Figure 13

First information block ──Configure──▶ Symbols in a first time domain resource as a first type in a first frequency domain sub-resource

First information block ──Configure──▶ Symbols in a first time domain resource as a second type in a second frequency domain sub-resource

Figure 14

First node 1500

First receiver 1501

First processor 1502

Figure 15

Second node 1600

First transmitter 1601

Second processor 1602

Figure 16

## INTERNATIONAL SEARCH REPORT

| International application No. |
| --- |
| **PCT/CN2023/119884** |

| A. | CLASSIFICATION OF SUBJECT MATTER |
| --- | --- |

H04W72/04(2023.01)i;  H04L5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT; VEN; CNKI; 3GPP: 信令, 下行控制信息, 带宽部分, 域, 字段, 比特, 字节, 频域资源分配, 子带非重叠全双工, 物理上行共享信道, 物理下行共享信道, DCI, BWP, field, bit, FDRA, SBFD, non-overlapping full duplex, PUSCH, PDSCH

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021230998 A1 (QUALCOMM INC.) 18 November 2021 (2021-11-18) description, paragraphs [0033]-[0158] | 1-28 |
| X | WO 2022015848 A1 (QUALCOMM INC.) 20 January 2022 (2022-01-20) description, paragraphs [0041]-[0217] | 1-28 |
| A | CN 114095135 A (SHANGHAI LANGBO COMMUNICATION TECHNOLOGY CO., LTD.) 25 February 2022 (2022-02-25) entire document | 1-28 |
| A | XIAOMI. "Discussion on subband non-overlapping full duplex" *3GPP TSG RAN WG1 #109-e e-Meeting, R1-2203815*, 29 April 2022 (2022-04-29), text, section 2 | 1-28 |
| A | ITRI. "Discussion on potential enhancements on dynamic/flexible TDD" *3GPP TSG RAN WG1#109-e e-Meeting, R1-2204442*, 29 April 2022 (2022-04-29), text, section 2 | 1-28 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 November 2023** | **29 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119884**

| Patent document cited in search report | | | Publication date (day/month/year) | Patent family member(s) | | | Publication date (day/month/year) |
|---|---|---|---|---|---|---|---|
| WO | 2021230998 | A1 | 18 November 2021 | US | 2021360676 | A1 | 18 November 2021 |
| | | | | US | 11627596 | B2 | 11 April 2023 |
| | | | | TW | 202143779 | A | 16 November 2021 |
| | | | | EP | 4151006 | A1 | 22 March 2023 |
| | | | | KR | 20230008728 | A | 16 January 2023 |
| | | | | BR | 112022022291 | A2 | 20 December 2022 |
| WO | 2022015848 | A1 | 20 January 2022 | US | 2023239851 | A1 | 27 July 2023 |
| | | | | EP | 4183089 | A1 | 24 May 2023 |
| CN | 114095135 | A | 25 February 2022 | | None | | |

Form PCT/ISA/210 (patent family annex) (July 2022)